# EUROPEAN PATENT APPLICATION

(11) **EP 4 703 771 A1**
(43) Date of publication of application: **04.03.2026**
(21) Application number: 24796042.0
(22) Date of filing: 23.04.2024
(51) Int. Cl.: G01S 17/88, G01C 21/20, G01C 21/00

(54) **ROBOT POSITIONING METHOD BASED ON MULTIPLE LAYERS OF GRID MAPS, AND CHIP AND LASER ROBOT**

(30) Priority: 28.04.2023 CN 202310474756
(71) Applicant: Amicro Semiconductor Co., Ltd., Hengqin New District, Zhuhai City Guangdong 519000 (CN)
(72) Inventor: HE, Zaisheng, Zhuhai, Guangdong 519000 (CN); HUANG, Liying, Zhuhai, Guangdong 519000 (CN); WANG, Yuelin, Zhuhai, Guangdong 519000 (CN); XIAO, Gangjun, Zhuhai, Guangdong 519000 (CN); XU, Dengke, Zhuhai, Guangdong 519000 (CN); LAI, Qinwei, Zhuhai, Guangdong 519000 (CN)
(74) Representative: Monteiro Alves, Inês
(86) International application number: PCT/CN2024/089256
(87) International publication number: WO 2024/222661

(57) **Abstract**

This application discloses a robot positioning method based on a multi-layer grid map, a chip and a laser robot, the robot positioning method includes: collecting, by the robot, data of laser points by using a laser sensor; obtaining, by the robot, multiple layers of grid maps layer by layer in order from low resolution to high resolution; traversing, by the robot, candidate solutions in a current layer of grid map; controlling a plurality of occupancy probability values obtained correspondingly for the data of laser points at a currently traversed candidate solution to be sequentially summed when the robot determines that the currently traversed candidate solution is a feasible solution; setting, based on a ratio of a resolution of a next layer of grid map to a resolution of the current layer of grid map, the determined feasible solution as a candidate solution of the next layer of grid map; recursively determining feasible solutions in candidate solutions of the layers of grid map in the order from low resolution to high resolution until an optimal feasible solution is determined, and setting the optimal feasible solution as a re-localization result of the robot.

## Description

### TECHNICAL FIELD

This application relates to the field of map re-localization technologies, in particular to a robot positioning method based on a multi-layer grid map, a chip and a laser robot.

### BACKGROUND

Currently, the global re-localization method of robot can employ laser radar-based global re-localization techniques. For sweeping robots utilizing laser maps for re-localization, it mostly relies on software algorithm implementations in the industry. For example, random particles are generated within a known position drift range of a grid map, a matching degree between the laser radar data of all particles and the current map is calculated, the optimal particle is selected for replication, the robot then resamples all particles, and traverses generated laser radar data by repeatedly using the matching method. After multiple iterations, the location where a particle swarm converges is the true pose of the robot. When performing global re-localization using particle filtering based on laser radar, the robot needs to keep moving until the particles converge, which consumes a long time. Since both the matching method and predicting the correct robot pose require traversing various pose information generated by the laser radar data, it consumes considerable computational resources of the processor for completing a relatively accurate localization operation, which is unfavorable for real-time robot localization operations.

### SUMMARY

This application discloses a robot positioning method based on a multi-layer grid map, a chip and a laser robot, a specific technical solution of this application includes: collecting, by the robot, data of laser points by using a laser sensor; obtaining, by the robot, multiple layers of grid maps layer by layer in order from low resolution to high resolution; where the multiple layers of grid maps are grid maps with multiple resolution levels, and each layer of grid map is configured with one corresponding resolution level; traversing, by the robot, candidate solutions in a current layer of grid map, and controlling a plurality of occupancy probability values obtained correspondingly for the data of laser points at a currently traversed candidate solution to be sequentially summed, to obtain a real-time probability sum value; determining, by the robot based on the currently calculated real-time probability sum value, whether the currently traversed candidate solution is a feasible solution or an infeasible solution; controlling, by the robot, the plurality of occupancy probability values obtained correspondingly for the data of laser points at the currently traversed candidate solution to stop being summed when the robot determines that the currently traversed candidate solution is a feasible solution; setting, based on a ratio of a resolution of a next layer of grid map and a resolution of the current layer of grid map, the determined feasible solution as a candidate solution of the next layer of grid map; recursively determining feasible solutions in candidate solutions of the layers of grid maps in the order from low resolution to high resolution until an optimal feasible solution is determined, and setting the optimal feasible solution as a re-localization result of the robot.

Hence, each time the robot determines a feasible solution or an infeasible solution in each layer of the grid map, it can immediately exit the probability summation calculation, thereby avoiding subsequent redundant calculations for the same candidate solution. This allows the robot to complete a relatively accurate positioning operation in the multi-layer grid map within the coverage area of its laser sensor without consuming excessive computing power resources, which benefits the robot's real-time and precise positioning operation. Furthermore, during the process where the robot layer-by-layer traverses the layers of grid maps with various resolutions, when the currently traversed candidate solution is an infeasible solution, the robot stops further traversal and calculation of the real-time probability sum, minimizing wasted computational time and thus significantly shortening the robot's re-localization time. Moreover, when the currently traversed candidate solution is a feasible solution, the robot continues to traverse a layer of grid map with a higher resolution, allowing the robot to initiate searches from positions with high probability in the layer of grid map having the corresponding resolution. This reduces the computational load and search space associated with traversing the layers of grid maps with relatively high resolution, thereby improving search speed.

### BRIEF DESCRIPTION OF THE DRAWINGS

Fig.1 is a flow chart illustrating a robot positioning method based on a multi-layer grid map according to the embodiments of this application;
Fig.2 is a flow chart illustrating a process of determining whether a currently traversed candidate solution is a feasible solution or an infeasible solution according to the embodiments of this application.

### DETAILED DESCRIPTION

The specific embodiments of this application are described below with reference to the accompanying drawings. When a mobile robot moves within an environmental region, it uses a laser sensor to scan the surrounding environment. Typically, a laser probe performs scanning though rotating 360 degrees, collects laser points from various directions and converts them into a grid coordinate system to establish a laser map. When distinguishing map resolutions and applying them to large-scale positioning calculations, multiple layers of grid maps are established, which are considered as laser maps with multiple resolutions formed by the multiple layers of grid maps. Next, at least one target position can be determined based on the probability information of the collected laser points falling into the coordinate positions of the map at each resolution. Thus, the mobile robot can relocate to the target position using the laser map, and the target position is a location where the robot has previously been positioned but has lost its pose information.

The robot positioning method based on the multi-layer grid map in the embodiments of this application has the basic positioning concept in multiple layers of grid maps as follows. That is, the robot positioning method includes: collecting by the robot data of laser points by using a laser sensor. The robot is equipped with the laser sensor for scanning the environment to collect the data of laser points, and each scan can obtain data of multiple laser points data. The robot also performs position transformation operation on the data of laser points collected by the laser sensor in the current layer of grid map in parallel. Each time of performing position transformation operation, a target point and its corresponding occupancy probability value are obtained, where one target point is obtained through performing one round of position transformation operation on data of one laser point, and a pose used when performing one round of position transformation operation on the data of one laser point may serve as a candidate solution. When a position of the robot is set as a coordinate system origin in the layer of grid map, the pose used when performing one round of position transformation operation on the data of one laser point may directly serve as a pose of a target point, and the candidate solution may be used as a preliminary positioning result of the robot in the current layer of grid map. For example, the robot controls the data of laser points to undergo multiple rounds of position transformation operations. This means that the data of laser are different but undergo the coordinate offset operations of the same type (having the same coordinate offset in various coordinate axis directions) in a same clock cycle, translating to corresponding grid positions in the currently obtained layer of grid map, thereby obtaining multiple target offset coordinates and their corresponding occupancy probability values.

Furthermore, the robot obtains multiple layers of grid maps layer by layer in order from low resolution to high resolution. The multiple layers of grid maps are grid maps with multiple resolution levels, and each layer of grid map is configured with one corresponding resolution level. In this embodiment, a map at one resolution is a layer of grid map with single-level resolution. To achieve a fine search for feasible solutions or candidate solutions, the robot obtains multi-resolution grid maps from a Double Data Rate (DDR) memory in order from low resolution to high resolution.

For the multi-resolution grid maps, it should be appreciated that multi-resolution refers to resolutions of multiple levels having resolution values from large to small. The grid maps with the levels of resolutions form the multi-resolution grid maps, which may also be understood as a multi-layer grid map or a multi-level resolution grid map. Therefore, when the multi-resolution grid map is regarded as being formed by map tiles with multiple resolutions, it is a set of multiple tiles of grid maps with different resolutions. Moreover, these grid maps of different resolutions are all used to represent the same detection region, with each grid map corresponding to a single-layer grid map or a single-level resolution grid map. When the multi-resolution grid map is considered as a global grid map, this global grid map is a grid map that supports showing the same detection region at multiple resolutions. Each resolution corresponds to a single-layer map tile or a single-level resolution grid map in this global grid map. That is, after traversing the grid map of one resolution in the global grid map, the resolution value is changed, and a grid map of another resolution in the global grid map (which is a grid map of a different level resolution as compared with the grid map traversed previously) is traversed. The global grid map may be referred to as being capable of being refreshed into grid maps of different resolution levels, thereby enabling a candidate solution processing system to repeatedly traverse or selectively traverse the map of the same detection region according to each level resolution. Based on this, the robot positioning method in this application, during the process of searching the multi-layer grid map, generally starts from the grid map with the lowest resolution and sequentially increases the resolution step by step to perform a refined search, that is, to conduct a search in a map with finer resolution. In this description, a high resolution refers to a small resolution value, indicating a small offset step size; whereas a low resolution refers to a large resolution value, indicating a large offset step size.

The robot traverses candidate solutions in a current layer of grid map, and controls a plurality of occupancy probability values obtained correspondingly for the data of laser points at a currently traversed candidate solution to be sequentially summed, which is equivalent to perform accumulation for the currently traversed candidate solution in the current layer of grid map, to obtain a real-time probability sum value Next, the robot determines, based on the currently calculated real-time probability sum value, whether the currently traversed candidate solution is a feasible solution or an infeasible solution. The currently traversed candidate solution corresponds to one round of position transformation operation. Each time the occupancy probability value corresponding to one target point obtained by the robot through the same round of position transformation operation in the current layer of grid map is summed, a real-time probability sum value corresponding to one target point is calculated. Among the target points respectively obtained by performing the same position transformation operation on the data of multiple laser points in the current layer of grid map, each time the occupancy probability value corresponding to one target point is controlled to be summed, one real-time probability sum value is obtained. An obtaining order of the currently obtained real-time probability sum value is the same as an order of the target point participating in the summation.

As can be appreciated, when occupancy probability values corresponding to target points obtained through performing the same round of position transformation operation on the data of all laser points in the current layer of grid map are sequentially summed, it includes outputting and accumulation of the coordinates of the target points and their corresponding occupancy probability values scheduled by the robot. When the occupancy probability value corresponding to the target point obtained through performing the same round of position transformation operation (i.e., the same type of position transformation operation) on data of one of the laser points is scheduled to participate in the summation, a real-time probability sum value corresponding to one candidate solution is obtained, that is, obtaining the real-time probability sum value corresponding to the candidate solution associated with the executed same round of position transformation operation.

When the robot determines whether the currently traversed candidate solution is a feasible solution or an infeasible solution based on the currently calculated real-time probability sum value, it may be a dynamic determining process. In other words, as the data of laser point changes, the target point calculated at the currently traversed candidate solution and its corresponding occupancy probability value also change. Consequently, the real-time probability sum value obtained by sequential summation changes as well. Moreover, a reference value or threshold required for the determining also changes accordingly, so as to adapt to changes in the resolution of the grid map and changes in occupancy probability values at different grid positions, thereby improving the accuracy of determining a feasible or infeasible solution from the candidate solution.

When the robot determines that the currently traversed candidate solution is a feasible solution, it controls the plurality of occupancy probability values obtained correspondingly for the data of laser points at the currently traversed candidate solution to stop being summed. When it is determined that the robot has screened out one feasible solution in the current layer of grid map, the feasible solution is considered as a current optimal solution in the current layer of grid map, and can be configured as a candidate solution in a next obtained layer of grid map. To be specific, the robot sets, based on a ratio of a resolution of the next layer of grid map and a resolution of the current layer of grid map, the determined feasible solution as the candidate solution of the next layer of grid map, and recursively determines feasible solutions in candidate solutions of the layers of grid map in order from low resolution to high resolution. The recursively determining refers to repeatedly determining, for candidate solutions traversed in various layers of grid maps, whether the currently traversed candidate solution is a feasible solution or an infeasible solution, based on the currently calculated real-time probability sum value. Furthermore, a traversal order of the grid maps follows the order from low resolution to high resolution. This process is repeated until the optimal feasible solution is determined, and the optimal feasible solution is set as a re-localization result of the robot.

It is worth noting that when the robot determines that the currently traversed candidate solution is a feasible solution, it controls the plurality of occupancy probability values obtained correspondingly for the data of laser points at the currently traversed candidate solution to stop being summed, because continuing to calculate the real-time probability value for the same candidate solution, on the basis that the feasible solution has already been determined, is redundant calculation. Hence, until the currently traversed candidate solution is updated to a new candidate solution in the current layer of grid map, or the candidate solution in the next layer of grid map, the robot's invalid calculation amount at the currently traversed candidate solution is reduced.

It should be noted that one target offset coordinate is obtained by performing one round of position transformation operation on the data of laser points, and may be used to index its corresponding occupancy probability value. Each time a feasible solution or an infeasible solution is outputted, it is determined that one candidate solution is traversed. Furthermore, based on a resolution difference, the feasible solution may be converted into a candidate solution in the next layer of grid map. When the candidate solutions in one layer of grid map have been traversed, it may be considered that one layer of grid map has been fully traversed. Next, the robot proceeds to traverse next layers of grid maps in order from low resolution to high resolution and recursively screens for feasible solutions.

In some embodiments, one round of position transformation operation is performed on data of N laser points, to obtain N target points, i.e., N target offset coordinates of which occupancy probability values that need to participate in the summation. Each time one target point is calculated and obtained from the same round of position transformation operation in the current layer of grid map, an occupancy probability value corresponding to this target point is controlled to be added to the previously accumulated probability sum value. The previously accumulated probability sum value is updated as the current accumulated probability sum value. An initial accumulated probability sum value is 0. When occupancy probability values corresponding to N target points from the same round of position transformation operation are summed, a final real-time probability sum value is obtained.

In the above embodiment, the robot positioning method further includes: controlling, by the robot, the plurality of occupancy probability values obtained correspondingly for the data of laser points at the currently traversed candidate solution to stop being summed when the robot determines that the currently traversed candidate solution is an infeasible solution; setting a next candidate solution as the currently traversed candidate solution, where the next candidate solution is from one or more candidate solutions in the next layer of grid map or one or more untraversed candidate solutions in the current layer of grid map. It should be noted that continuing to calculate the real-time probability sum value for the same candidate solution, on the basis that an infeasible solution has already been determined, constitutes redundant computation. Therefore, before the currently traversed candidate solution is updated to a new candidate solution, the summation calculation of the multiple corresponding occupancy probability values obtained for the data of laser points at the currently traversed candidate solution is stopped. Consequently, the amount of invalid computation performed by the robot at the currently traversed candidate solution is reduced, thereby saving the robot's positioning time.

Next, the robot controls a plurality of occupancy probability values obtained correspondingly for the data of laser points at the updated currently traversed candidate solution to be sequentially summed, to obtain a real-time probability sum value, and continuing determining, based on the currently calculated real-time probability sum value, whether the updated currently traversed candidate solution is a feasible solution or an infeasible solution. This may involve continuing to screen for the feasible or infeasible solution in the current layer of grid map, or screening for an infeasible or feasible solution in a new layer of grid map. The feasible solution or infeasible solution is recursively determined among the candidate solutions of each layer of the grid map in order from low to high resolution, and this is repeated until the optimal feasible solution is determined, and the optimal feasible solution is set as the robot's re-localization result.

Hence, each time the robot determines a feasible solution or an infeasible solution in each layer of the grid map, it can immediately exit the probability summation calculation, thereby avoiding subsequent redundant calculations for the same candidate solution. This allows the robot to complete a relatively accurate positioning operation in the multi-layer grid map within the coverage area of its laser sensor without consuming excessive computing power resources, which benefits the robot's real-time and precise positioning operation.

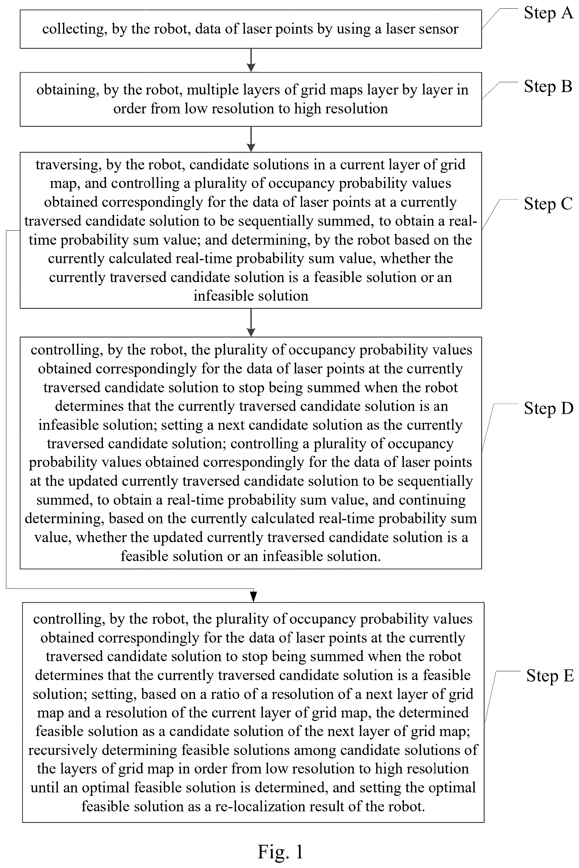

As an embodiment, with reference to Fig. 1, the robot positioning method includes the following steps.

Step A, collecting, by the robot, data of laser points by using a laser sensor. The robot is equipped with the laser sensor for scanning the environment to collect the data of laser points. Each scan can obtain data of multiple laser points, and the data is located within the current detection region. Pose information within the current detection region is fed back, including pose information of surrounding obstacles and pose information of the robot. Next, the method proceeds to Step B.

Step B, obtaining, by the robot, multiple layers of grid maps layer by layer in order from low resolution to high resolution. Next, the method proceeds to Step C. In step B currently being executed by the robot, the robot obtains the current layer of grid map.

Specifically, the current layer of the grid map is obtained from a memory built into the robot, which comes from the multiple layers of grid maps, i.e., grid maps with multiple resolution levels. The grid maps with multiple resolution levels are grid maps at multiple resolutions, where each layer of the grid map corresponds to one resolution. In order to achieve a fine search for feasible solutions or candidate solutions, the robot obtains multi-resolution grid maps from the DDR memory in order from low resolution to high resolution.

Whenever data of one laser point is obtained, the data of laser point is controlled to perform position transformation operation in parallel in the current layer of grid map. Whenever the position transformation operation is performed, a target point and its corresponding occupancy probability value are obtained, where one target point is obtained by performing one round of position transformation operation on the data of one laser point, and a pose used when performing one round of position transformation operation on the data of one laser point may serve as a candidate solution. The robot controls the data of the same one laser point to undergo multiple rounds of position transformation operations, that is, executes multiple candidate solutions. The data of different laser points undergo the coordinate offset operations of the same type (having the same coordinate offset in various coordinate axis directions), that is, executing the same candidate solution, and the candidate solution is translated to a corresponding grid position in the currently obtained layer of grid map, so that the data of multiple laser points may obtain multiple target offset coordinates and their corresponding occupancy probability values from one candidate solution.

Step C, traversing, by the robot, candidate solutions in a current layer of grid map, and controlling a plurality of occupancy probability values obtained correspondingly for the data of laser points at a currently traversed candidate solution to be sequentially summed, to obtain a real-time probability sum value; and determining, by the robot based on the currently calculated real-time probability sum value, whether the currently traversed candidate solution is a feasible solution or an infeasible solution.

In step C, the robot traverses each candidate solution in the current layer of grid map and calculates the corresponding real-time probability sum value. The result of performing one candidate solution calculation on the data of one laser point is one target point, and each target point is configured with one occupancy probability value. For the same candidate solution, the accumulation result of the occupancy probability values of multiple target points obtained from the data of multiple laser points is expressed using the real-time probability sum value. Therefore, one real-time probability sum value corresponds to the data of multiple laser points, and one result obtained by performing one candidate solution calculation on the data of one laser point corresponds to one occupancy probability value. Each time the robot traverses one candidate solution in the current layer of grid map, the occupancy probability value of the target point corresponding to the data of one laser point collected by the robot's laser sensor is accumulated once to obtain the real-time probability sum value. There are pre-set candidate solutions in the grid map obtained for the first time (which may be the grid map of the lowest resolution level traversed by the robot, and may be referred to as the first layer of grid map in this application).

In step C, the robot also determines whether the candidate solution currently traversed in the current layer of grid map is a feasible solution or an infeasible solution based on the currently calculated real-time probability sum value. It should be noted that the robot first screens out the candidate solution from the current layer of grid map and then determines it is a feasible solution or an infeasible solution. During the determining/screening process, the robot may maintain comparison with a fixed threshold or a dynamically changing threshold (a threshold that changes with the resolution of the grid map). When the robot determines that the currently traversed candidate solution in the current layer of grid map is an infeasible solution, step D is executed. When the robot determines that the currently traversed candidate solution in the current layer of grid map is a feasible solution, step E is executed.

Step D, controlling, by the robot, the plurality of occupancy probability values obtained correspondingly for the data of laser points at the currently traversed candidate solution to stop being summed when the robot determines that the currently traversed candidate solution is an infeasible solution; setting a next candidate solution as the currently traversed candidate solution; controlling a plurality of occupancy probability values obtained correspondingly for the data of laser points at the updated currently traversed candidate solution to be sequentially summed, to obtain a real-time probability sum value, and continuing determining, based on the currently calculated real-time probability sum value, whether the updated currently traversed candidate solution is a feasible solution or an infeasible solution.

Therefore, when it determines that an infeasible solution is determined in the current layer of grid map, the robot stops traversing the target point and its corresponding occupancy probability value obtained at the currently traversed candidate solution for the data of laser points that is not involved in the calculation, and naturally stops calculating the real-time probability sum value. Next, returning to step B and/or step C. When the candidate solutions are traversed in the current layer of grid map, it requires to switch the grid map. The method returns to step B to obtain the next layer of grid map. The next candidate solution is also a candidate solution in the next layer of grid map. The next layer of grid map may be understood as one layer of grid map with a higher resolution that has not been traversed by the robot. When the candidate solutions are not traversed in the current layer of grid map, the method returns to step C to obtain a next candidate solution. The next candidate solution is a candidate solution in the current layer of grid map that has not been traversed, that is, a candidate solution that has not participated in the ab0ve-mentioned position transformation operation to obtain the target point and its corresponding occupancy probability value.

When it is determined that the last traversed candidate solution in the grid map with highest resolution is determined as an infeasible solution, the traversal of the multi-layer grid map or the execution of the robot positioning method may be stopped to call other re-localization algorithms. Accordingly, the preset pose data may be selected as the robot's re-localization result. When it is determined that all traversed candidate solutions in the current layer of grid map are determined as infeasible solutions, the feasible solution in the previous layer of grid map is set as the optimal feasible solution and the calculation of the real-time probability sum value is stopped, and the optimal feasible solution is set as the robot's re-localization result, so as to reduce the amount of invalid calculations and data searches.

In some embodiments, when the robot traverses the candidate solutions in the current layer of grid map, a sum of the real-time probability sum of the target point and a dynamically changing reference value is less than or equal to a certain threshold, the robot determines that the currently traversed candidate solution is an infeasible candidate solution in the current layer of grid map, i.e., an infeasible solution. The robot then preferentially excludes this candidate solution when traversing the next layer of grid map and does not consider it as a candidate solution of the next layer of grid map. The next layer of grid map is a grid map with a higher resolution (higher resolution level), so that the amount of search data and computation time can be reduced. Furthermore, the infeasible solution can be screened out and the computation of the real-time probability sum value can be terminated in a timely manner before the sum of the corresponding occupation probability values of the data of all laser points is calculated. This reduces the quantity of position transformation operations assigned to the same batch of laser point data by the infeasible solution, i.e., reduces the ineffective computation of the laser point data in the grid map of the corresponding resolution, thereby speeding up the computation and search speed. When the current layer of grid map is a grid map with a higher resolution (higher resolution level), the data calculation time can be greatly reduced.

Step E, controlling, by the robot, the plurality of occupancy probability values obtained correspondingly for the data of laser points at the currently traversed candidate solution to stop being summed when the robot determines that the currently traversed candidate solution is a feasible solution; setting, based on a ratio of a resolution of a next layer of grid map and a resolution of the current layer of grid map, the determined feasible solution as a candidate solution of the next layer of grid map; recursively determining feasible solutions among candidate solutions of the layers of grid map in order from low resolution to high resolution until an optimal feasible solution is determined, and setting the optimal feasible solution as a re-localization result of the robot.

Combining Step D and Step E, it is evident that no matter whether the candidate solution currently traversed by the robot is a feasible solution or an infeasible solution, the plurality of occupancy probability values obtained correspondingly for the data of laser points at the currently traversed candidate solution is controlled to stop being summed, thereby reducing the robot's re-localization time and improving search efficiency.

Specifically, when the robot determines that the currently traversed candidate solution is a feasible solution, the robot determines that the candidate solution is a feasible solution in the current layer of grid map, and sets the screened feasible solution as the candidate solution in the next layer of grid map based on the resolution difference between the next layer of grid map and the current layer of grid map. It can also directly update the candidate solution in the next layer of grid map with the screened feasible solution in the grid map with the same resolution. The pose data corresponding to the candidate solution in the next layer of grid map is written into the robot's built-in memory and saved for the robot to screen in the process of traversing the next layer of grid map. Therefore, after the robot determines that the candidate solution in the current layer of grid map is a feasible solution and sets the screened feasible solution as the candidate solution in the next layer of grid map, the robot needs to return to Step B to obtain the next layer of grid map, including obtaining the candidate solution in the next layer of grid map, and executes Step C to Step E to traverse and determine the candidate solutions one by one in the same layer of grid map, that is, to achieve recursive determining of candidate solutions one by one. Hence, though repeatedly executing Step B to Step E, it achieves recursive determining of feasible solutions layer by layer on the grid map, specifically traversing and determining the candidate solutions layer by layer on the grid map, until a feasible solution is determined in the last obtained layer of grid map and determined as the optimal feasible solution.

In some embodiments, when the robot controls the occupancy probability values obtained through performing the same round of position transformation operation (corresponding to the same candidate solution) on the data of all laser points in the current layer of grid map to be sequentially summed, and the obtained sum value is greater than or equal to a threshold value, the candidate solution corresponding to the same round of position transformation operation is set as a feasible solution, that is, a feasible solution of the current layer of grid map, and step E is executed. Before the robot traverses the next layer of grid map, it needs to first divide the feasible solution of the current layer of grid map into corresponding candidate solutions, so as to improve the search precision in the next layer of grid map which is a grid map with higher resolution (higher resolution level). Specifically, after the robot determines that the candidate solution traversed in the current layer of grid map is a feasible solution, the robot screens out the feasible solution from the current layer of grid map in step E, where the pose data corresponding to the screened feasible solution includes the coordinates of the target point (the coordinates in the current layer of grid map, which can be used for positioning in the next layer of grid map after resolution conversion and decomposition, and may be converted in proportion according to the difference in resolution) obtained in the current layer of grid map by performing the same round of position transformation operation and its corresponding occupancy probability value. The screened feasible solution can be set as the candidate solution of the next layer of grid map and accordingly pose data corresponding to the candidate solution of the next layer of grid map can be set and used for performing the same round of position transformation operation on the data of laser points. Thus, when traversing to the next layer of grid map, and performing the same round of position transformation operation on the data of laser points in the next layer of grid map, the candidate solution of the next layer of grid map is read from the memory built into the robot, without repeatedly performing the same round of position transformation operation on the data of laser points, so as to provide the robot with the pose data for repositioning when the robot recursively searches for the optimal feasible solution layer by layer in the grid maps in order from low resolution to high resolution. Therefore, the robot first forms a set of initial candidate solution on the lowest-resolution grid map and begins searching for a feasible solution. Next, the robot traverses the grid maps layer by layer in order from low resolution to high resolution, and screens a feasible solution from the set of candidate solution in each layer of grid map, divides the feasible solution into multiple candidate solutions and uses the multiple candidate solutions as candidate solutions for the next layer of grid map. That is, the current optimal solution is converted into candidate solutions that adapt to the resolution of the next layer of grid map, until a final feasible solution is screened out in the highest-resolution grid map as the optimal feasible solution, forming a re-localization result, which is considered as completing the robot's re-localization process in the multi-resolution grid map.

The robot executes Step A to Step E, including completing the traversal and determining of all candidate solutions in the same layer of grid map by repeatedly executing Step C to Step E, and traversing and determining the candidate solutions in the layers of grid maps layer by layer by repeatedly executing Step B to Step E, traversing to the last layer of grid map (the grid map with the highest resolution), screening out various feasible solutions from the candidate solutions of the last layer of grid map, and the feasible solutions are used as a set of optimal feasible solutions, thereby providing re-localization pose data for the grid map with the highest resolution. Optionally, when the robot's position is set to the origin of the coordinate system of the grid map, via the set of optimal feasible solutions, the robot can be relocated to relatively accurate pose information, or a pose of data of a laser point currently scanned by the laser sensor in the multi-resolution grid map can be determined. To this end, the global re-localization process is completed, and the global re-localization is considered successful, otherwise the re-localization search fails.

Hence, during the process where the robot layer-by-layer traverses the layers of grid maps with various resolutions, when the currently traversed candidate solution is an infeasible solution, the robot stops further traversal and calculation of the real-time probability sum, minimizing wasted computational time and thus significantly shortening the robot's re-localization time. Moreover, when the currently traversed candidate solution is a feasible solution, the robot continues to traverse a layer of grid map with a higher resolution, allowing the robot to initiate searches from positions with high probability in the layer of grid map having the corresponding resolution. This reduces the computational load and search space associated with traversing the layers of grid maps with relatively high resolution, thereby improving search speed.

In some embodiments, during the robot recursively determining feasible solutions in candidate solutions of the layers of grid maps in the order from low resolution to high resolution, the robot positioning method further includes: setting, by the robot, a determined feasible solution in a last layer of grid map as the optimal feasible solution when a candidate solution in the last layer of grid map is determined to be the feasible solution, and setting the optimal feasible solution as the re-localization result; wherein the last layer of grid map is a layer of grid map with a highest resolution searched by the robot according to the order from low resolution to high resolution, based on updating the feasible solution of the current layer of grid map as the candidate solution of the next layer of grid map. The pose data involved in the feasible solution in the grid map with the highest resolution is configured as the pose data for re-localization of the robot in the grid map with the highest resolution.

In some embodiments, during the robot recursively determining feasible solutions in candidate solutions of the layers of grid maps in the order from low resolution to high resolution, the robot positioning method further includes: setting, by the robot, a determined feasible solution in a (S-1)-th layer of grid map as the optimal feasible solution when all candidate solutions in an S-th layer of grid map cannot be determined to be feasible solutions, and a candidate solution in the (S-1)-th layer of grid map is determined to be the feasible solution; and setting the optimal feasible solution as the re-localization result; where S is an integer greater than 1, S is less than or equal to the maximum number of layers allowed to be configured in the multiple layers of grid maps, and corresponds to the level of the last layer of grid map. Thus, the pose data involved in the feasible solution in the (S-1)-th layer of grid map can be configured as the pose data for re-localization of the robot in the (S-1)-th layer of grid map or a higher layer of grid map.

Preferably, the laser sensor of the robot collects the data of laser points located in a current detection region. The robot stores grid maps of the current detection region at multiple resolution levels, and configures the grid maps at multiple resolutions as multiple layers of grid maps arranged in the order from low resolution to high resolution. Each layer of grid map is a map tile generated within an effective detection range of the laser sensor of the robot. Each layer of grid map or each grid map with one resolution level may be regarded as a map tile generated within the effective detection range of the laser sensor, except that the resolution required for the effective detection range is different, and the degree of refinement displayed is different. The current detection region is represented as: a region of position drift region formed by angles and coordinates corresponding to all rounds of position transformation operations required to be performed on the data of all laser points in the current layer of grid map. The current detection region is represented as a region of position drift region formed by angles and coordinates (candidate solutions) corresponding to all rounds of position transformation operations required to be performed on the data of all laser points in the current layer of grid map. In one layer of grid map, a set of all pre-defined candidate solutions to be traversed may be defined as a set of candidate solutions, and each candidate solution to be traversed is a combination of an angle and coordinates to be traversed.

In one layer of grid map, each candidate solution to be traversed is a combination of an angle and coordinates to be traversed. One candidate solution corresponds to one round of position transformation operation. One round of position transformation operation is represented as the combination of the angle and the coordinates, or a combination of an angle deflection amount and a coordinate offset amount, so that the coordinate offset amount of the feasible solution in the current layer of grid map is used to represent a coordinate region in the next layer of grid map, that is, it needs to use more grids in the grid map with a relatively high resolution, relative to the grid map with a relatively low resolution, to indicate a region of the same physical size.

For one layer of grid map, the current layer of grid map is one layer of grid map currently obtained by the robot, and the next layer of grid map is the next layer of grid map obtained by the robot. The resolution of the next layer of grid map is higher than the resolution of the current layer of grid map. The current layer of grid map and the next layer of grid map are both laser grid maps, where the data of laser point (i.e., pose coordinates of the laser point, a scan point, or a point in the point cloud) falls into the corresponding grid and an occupancy probability value is matched in the grid. For grid maps, the entire environment scanned by the laser sensor is first divided into rectangular grids with the same side length. The side length of the grid is selected based on a size of an autonomous mobile device where a feasible solution processing system is located and the requirement of indicating the environment. The resolution of the map may be expressed by the quantity of grids. For example, for a 0.05m resolution map, 20 grids are required to represent 1m. Next, through the continuous movement of the robot in the environment, information of each grid in the scanned environment is obtained and an occupancy probability value is assigned to represent the probability of this grid being occupied. Each grid represents a rectangular tile, and a value in the range of (0,1) is used to indicate the probability that the tile is occupied, indicating whether there is an obstacle at the corresponding physical location. Therefore, the map data of the grid map may include coordinates of the grid, pose information of the target point in the grid map, the occupancy probability value corresponding to the target point falling into the corresponding grid, the grid side length, an element of a grid map coordinate system, the map resolution, a coordinate offset step size required for coordinate offset in the grid map, and an angle deflection step size required for angle deflection in the grid map.

In the above embodiments, one round of position transformation operation corresponding to one candidate solution includes an angle deflection operation and a coordinate offset operation. The coordinate offset operation includes an abscissa offset operation and an ordinate offset operation. The same round of position transformation operation refers to angle deflection operations of the same type and coordinate offset operations of the same type. One round of position transformation operation includes: performing angle deflection operation on the data of one laser point, performing coordinate offset operation on the data of one laser point in one coordinate axis direction, and performing coordinate offset operation on the data of one laser point in the other coordinate axis direction, to obtain one target point, thereby transforming the data of one laser point into one target point through one round of position transformation operation. One target point is configured with one occupancy probability value in one layer of grid map. When the one coordinate axis direction refers to an abscissa axis direction, the other coordinate axis direction refers to an ordinate axis direction, it represents that the abscissa offset operation is performed first and the ordinate offset operation is then performed. When the one coordinate axis direction refers to an ordinate axis direction, the other coordinate axis direction refers to an abscissa axis direction, it represents that the ordinate offset operation is performed first and the abscissa offset operation is then performed, which can be considered as forming one coordinate offset operation. In the coordinate system of each layer of grid map, one coordinate axis direction is perpendicular to the other coordinate axis direction.

In the same round of position transformation operation, the offset direction of the coordinate offset performed first and the coordinate offset amount generated by the coordinate offset performed first relative to a coordinate before the coordinate offset performed first in an offset direction are pre-defined, and the offset direction of the coordinate offset performed later and the coordinate offset amount generated by the coordinate offset performed later relative to a coordinate before the coordinate offset performed later in an offset direction are also pre-defined.

When traversing target points in the grid map or performing at least one round of position transformation operation, the maximum quantity of grids allowed to be accommodated in the abscissa axis direction of the grid map is preferably greater than or equal to a product of the maximum quantity of offset occurrences allowed for the same reference coordinate in the abscissa axis direction of the grid map and an abscissa offset step size; and the maximum quantity of grids allowed to be accommodated in the ordinate axis direction of the grid map is preferably greater than or equal to a product of the maximum quantity of offset occurrences allowed for the same reference coordinate in the ordinate axis direction of the grid map and an ordinate offset step size.

The robot does not limit an execution order between the abscissa offset operation and the ordinate offset operation in one round of position transformation operation. The robot is pre-configured, according to the resolution of the current layer of grid map, with the maximum quantity of offset occurrences allowed for the reference coordinate in the abscissa axis direction of the current layer of grid map and the coordinate offset step size in the abscissa axis direction, and the maximum quantity of offset occurrences allowed for the reference coordinate in the ordinate axis direction of the current layer of grid map and the coordinate offset step size in the ordinate axis direction.

As an embodiment, the robot positioning method is divided into at least one of the following steps.

Step 1: traversing the candidate solutions in the current layer of grid map, and performing one round of position transformation operation corresponding to the currently traversed candidate solution on the data of laser points to obtain target points, where each time one target point is obtained, the quantity of target points is increased by one. Next, proceed to Step 2.

The robot traverses each candidate solution in the set of currently determined candidate solutions by repeatedly executing Step 1. Each time the robot traverses one candidate solution in the current layer of grid map by executing Step 1, it obtains one target point and its corresponding occupancy probability value, and counts the quantity of obtained target points. next, the robot executes Step 2, until it has traversed the current layer of grid map or terminates this method because an infeasible solution is screened out.

It should be noted that each candidate solution corresponds to one round of position transformation operation, and at least one round of position transformation operation is performed in parallel on data of laser points in each data channel. The current layer of grid map is one layer of grid map currently obtained by a feasible solution obtaining module.

Step 2: controlling occupancy probability values corresponding to respective target points, which are obtained through performing one round of position transformation operation corresponding to the currently traversed candidate solution on the data of all laser points, to be sequentially summed; where, upon each summation, a current target point and its corresponding occupancy probability value are determined according to a summation sequence of the occupancy probability values corresponding to the respective target points, and a currently summed value is set as a real-time probability sum value of the current target point; determining, based on the real-time probability sum value of the current target point and the quantity of target points, whether the currently traversed candidate solution is a feasible solution or an infeasible solution, to determine, based on the currently calculated real-time probability sum value, whether the currently traversed candidate solution is a feasible solution or an infeasible solution, and setting the currently determined feasible solution as a current optimal solution after determining that the currently traversed candidate solution is the feasible solution. Next, proceed to Step 3.

Specifically, each time one candidate solution is traversed in the current layer of grid map in Step 1, in Step 2, the robot controls occupancy probability values corresponding to respective target points, which are obtained through performing one round of position transformation operation corresponding to the currently traversed candidate solution on the data of laser points, to be sequentially summed; where, upon each summation, a current target point and its corresponding occupancy probability value are determined according to a summation sequence of the occupancy probability values corresponding to the respective target points, and a currently summed value is set as a real-time probability sum value of the current target point. Next, the robot determines, based on a relationship among the real-time probability sum value of the current target point, the maximum single-point probability value and a preset screening threshold, a feasible solution from the candidate solutions determined in step 1 and sets as the current optimal solution. Then, proceed to Step 3.

Each time step 2 is executed, one candidate solution is traversed and the corresponding round of position transformation operation is performed, and based on this, it is determined whether the corresponding candidate solution is a feasible solution. When the robot traverses one layer of grid map, it traverses the currently determined candidate solutions by repeatedly executing step 2, including successively determining that each candidate solution is a feasible solution or an infeasible solution, and setting the determined feasible solution as the current optimal solution, as well as the current optimal solution in the multi-layer grid map. After traversing the first layer of grid map, the obtained set of candidate solutions is a set of candidate solutions corresponding to each round of position transformation operation that needs to be performed in the current layer of grid map. The robot controls the occupancy probability values corresponding to respective target points, which are obtained through performing one round of position transformation operation corresponding to the currently traversed candidate solution on the data of all laser points, to be sequentially summed, where, upon each summation, the current target point and its corresponding occupancy probability value are determined according to the summation sequence of the occupancy probability values corresponding to the respective target points. Next, after determining that the occupancy probability value that is currently being summed refers to an occupancy probability value currently participating in the summation among occupancy probability values corresponding to all target points obtained through the same round of position transformation operation, the robot sets the currently summed value as the real-time probability sum value of the current target point. Based on the real-time probability sum value of the current target point and the maximum single-point probability value, a feasible solution is screened out from the set of candidate solutions determined in Step 1. Specifically, a relationship between a calculation result of the real-time probability sum value of the current target point and the maximum single-point probability value and the preset screening threshold is used to determine whether the currently traversed candidate solution is a feasible solution.

Each time a feasible solution is determined in the current layer of grid map, the quantity of feasible solutions in the current layer of grid map is counted by one. After all candidate solutions in the current layer of grid map are traversed and determined sequentially whether they are feasible solutions, the quantity of feasible solutions in the current layer of grid map is counted.

As can be appreciated, by repeatedly executing Step 1 and Step 2, the robot controls the occupancy probability values corresponding to respective target points, which are obtained through performing one round of position transformation operation corresponding to the currently traversed candidate solution on the data of all laser points, to be sequentially summed, until all the occupation probability values corresponding to the target points obtained by performing the same one round of position transformation operation corresponding to the currently traversed candidate solution on the data of all laser points are added together, to obtain the last real-time probability sum value of the target point. By repeatedly executing step 2, the robot performs position transformation operations corresponding to all candidate solutions on the data of all laser points, to obtain the corresponding real-time probability sum value. The quantity of accumulated real-time probabilities sum values is equal to the quantity of target points in the current layer of grid map.

In step 2, that the occupancy probability values corresponding to respective target points, which are obtained through performing one round of position transformation operation corresponding to the currently traversed candidate solution on the data of all laser points are sequentially summed is equivalent to an accumulation operation. The quantity of summations may be regarded as the quantity of accumulations of the occupation probability values one by one, and it needs to perform threshold determination on the sum obtained by each summation, to determine whether the candidate solution corresponding to the current target point is an infeasible solution or a feasible solution in the current layer of grid map, thereby to determine whether to stop the accumulation operation before traversing all target points, and a feasible solution is set as the current optimal solution when the feasible solution is determined.

Step 3: setting, based on the ratio of the resolution of the next layer of grid map and the resolution of the current layer of grid map, the determined feasible solution as at least one of candidate solutions of the next layer of grid map after the feasible solution is determined in the current layer of grid map by executing Step 2. This is equivalent to setting the updated current optimal solution as at least one of candidate solutions of the next layer of grid map, thereby determining at least one round of position transformation operation required to be performed in the next layer of grid map. After all candidate solutions in the current layer of grid map are traversed by executing Step 2, it is determined that all feasible solutions have been screened out from the current layer of grid map, the next layer of grid map is set as the current layer of grid map as referred to in Step 1, and the last set candidate solutions of the next layer of grid map are set as the candidate solutions as referred to in Step 1. In some embodiments, abscissa and ordinate coordinate values and angle values of the target points calculated or screened in real time by the most recently executed step 1 can be used. The target point and its corresponding occupancy probability value obtained last time can be updated or stored in ascending order of resolution. Next, Step 1, Step 2, and Step 3 are repeatedly executed until traversing to the last layer of grid map (i.e., the layer of grid map with the highest resolution) and a feasible solution is determined therefrom, or until the quantity of feasible solution determined in the current layer of grid map is zero. A last set current optimal solution in the same layer of grid map is set as the optimal feasible solution, and the optimal feasible solution is set as the re-localization result of the robot; It may also be determined that the robot has completed all candidate solutions in one layer of grid map. Specifically, when traversing to the last layer of grid map (i.e., the layer of grid map with the highest resolution) and determining a feasible solution therefrom, the feasible solution in the last layer of grid map (i.e., the layer of grid map with the highest resolution) is set as the current optimal solution and serves as the optimal feasible solution. Alternatively, when the quantity of feasible solution determined in the current layer of grid map is zero, the current optimal solution set in the previous layer of grid map is set as the optimal feasible solution.

It should be noted that, in the current layer of grid map, the occupancy probability value corresponding to one target point obtained by performing each round of position transformation operation on the data of one laser point is summed to obtain one corresponding real-time probability sum value. For the same round of position transformation operation, the quantity of accumulated real-time probability sum values is equal to the quantity of target points in the current layer of grid map. The current layer of grid map is one layer of grid map currently obtained by the robot, the next layer of grid map is one layer of grid map obtained by the robot next time. The quantity of candidate solutions in the next layer of grid map is less than the quantity of candidate solutions in the current layer of grid map, and a resolution of the next layer of grid map is higher than a resolution of the current layer of grid map.

Furthermore, from the above Step 2 and Step 3, it is evident that the occupancy probability values corresponding to the target points obtained in each round of position transformation operations on the data of all laser point are added together, to obtain the corresponding map probability sum value. The quantity of map probability sum value is equal to the quantity of candidate solutions in the current layer of grid map. Moreover, all feasible solutions in the current layer of grid map that are screened out through Step 2 form a set of feasible solutions in the current layer of grid map. The feasible solutions in the screened set of feasible solutions are sequentially set as the candidate solutions in the next layer of grid map. Due to the resolution difference between maps of different levels, the currently screened set of feasible solutions is not necessarily used as the set of the candidate solution described in step 1 directly. The abscissa and ordinate coordinate values and angle values of the target points calculated or screened in real time by the most recently executed step 2 (i.e., executing step 2 in the first layer of grid map) still need to be decomposed according to the change in resolution. After the feasible solutions in the screened set of feasible solution are sequentially set as candidate solutions in the next layer of grid map, in step 3, the set of candidate solutions described in step 1 is further updated to the set of candidate solutions in the next layer of grid map, and each target point obtained by performing one round of position transformation operation corresponding to the currently traversed candidate solution on the data of all the laser points described in Step 1 is updated to the target point corresponding to the candidate solution in the next layer of grid map, and the occupancy probability value corresponding to target point obtained by performing one round of position transformation operation corresponding to the currently traversed candidate solution on the data of all the laser points described in Step 1 is updated to the occupancy probability value corresponding to the target point that corresponds to the candidate solution in the next layer of grid map. They are used for subsequent re-localization in the layer of grid map with higher resolution, so that the robot can search for the set of optimal feasible solutions layer by layer in the layers of grid maps in order from low resolution to high resolution.

The robot further repeatedly executes Step 1 to Step 3 to obtain the corresponding feasible solution and infeasible solution from the set of candidate solutions of each layer of grid map in order from low resolution to high resolution, until traversing to the last layer of grid map and a feasible solution is determined therefrom, or until the quantity of feasible solution determined in the current layer of grid map is zero (all candidate solutions in one layer of grid map may be infeasible solutions) the current optimal solution is set as the re-localization result of the robot, which is also equivalent to setting the latest screened feasible solution as the optimal feasible solution. When traversing to the last layer of grid map and determining a feasible solution therefrom, it can be determined that the traversal of the multi-layer grid map has been completed. When the quantity of feasible solutions screened out by the robot in the most recently traversed grid map layer is equal to zero, that is, when the quantity of feasible solutions screened out by the robot in the current layer of grid map by repeatedly executing step 2 is zero, it is determined that there is no feasible solution in the current layer of grid map, and there is no need to continue traversing the layer of grid map with higher resolution. Next, the current optimal solution screened out in the previous layer of grid map is set as the optimal feasible solution. The previous layer of grid map is the layer of grid map obtained last time. The quantity of candidate solutions in the previous layer of grid map is greater than the quantity of candidate solutions in the current layer of grid map, and the resolution of the previous layer of grid map is lower than the resolution of the current layer of grid map. This allows the optimal feasible solution to be searched layer by layer in grid maps with resolutions from low to high.

It should be appreciated that, each time the robot executes Step 2 on one layer of grid map, the current target point is a target point corresponding to the currently summed occupancy probability value. The currently summed occupancy probability value is an occupancy probability value currently participating in the summation among the occupancy probability values corresponding to all target points obtained in the same round of position transformation operation. The currently summed sum value is a sum of the occupancy probability values that have been summed among the occupancy probability values corresponding to the target points obtained in the same round of position transformation operation. The robot first selects feasible solutions from the candidate solutions in the current layer of grid map, and sets the selected set of feasible solutions as the candidate solutions in the next layer of grid map. Next, the robot screens out feasible solutions from the candidate solutions in each layer of grid map in order from low resolution to high resolution, to progressively reduce a search range of candidate solutions layer by layer, and can traverse and calculate the target point while determining the feasible solution in the same layer of grid map, until recursively traversing to the grid map with the highest resolution and screening out a feasible solution therefrom. Since the multi-resolution grid map is traversed and screened layer by layer, and the feasible solution is obtained at higher resolution, it enables a significant improvement in determining accuracy when searching in the layer with higher resolution level.

As an embodiment, in step 3, setting, based on the ratio of the resolution of the next layer of grid map to the resolution of the current layer of grid map, the determined feasible solution as candidate solutions of the next layer of grid map includes: dividing, using the ratio of the resolution of the next layer of grid map to the resolution of the current layer of grid map, the feasible solution determined in the current layer of grid map into a plurality of candidate solutions in the next layer of grid map, including but not limited to dividing into multiple candidate solutions in a specific angle direction, or reducing to a smaller quantity of candidate solutions in proportion, preferably a result of equal-distance division of coordinate offset amount and equal-angle division of angle deflection amount. The occupation probability value corresponding to the target point obtained by performing the corresponding position transformation operation corresponds to the occupation probability value corresponding to the target point (the target point obtained in the most recently executed step 1) that corresponds to the feasible solution before the division. A ratio of a coordinate offset step size corresponding to the feasible solution in the current layer of grid map to a coordinate offset step size corresponding to the candidate solution divided in the next layer of grid map is equal to the ratio of the resolution of the next layer of grid map to the resolution of the current layer of grid map. The ratio of the resolution of the next layer of grid map to the resolution of the current layer of grid map is equal to a ratio of a coordinate offset step size for performing coordinate offset operation in the current layer of grid map to a coordinate offset step size for performing coordinate offset operation in the next layer of grid map, so that the current layer of grid map described in Step 1 is updated to the next layer of grid map described in Step 3, including converting the coordinate offset step size for performing coordinate offset operation in the current layer of grid map into the coordinate offset step size for performing coordinate offset operation in the next layer of grid map, thereby to realize the robot changing layers and traversing the multi-resolution grid map.

In this embodiment, the pose change data in one round of position transformation operation that the robot needs to perform on the data of laser points in Step 1 is denoted as one candidate solution of one layer of grid map. The position transformation operation performed on the data of laser points in each layer of grid map includes the coordinate offset operation, and the coordinate offset operation is configured with the coordinate offset step size. The coordinate offset step size is preferably proportionally reduced to be represented by the quantity of grids, which is the same as the resolution of the grid map. The position transformation operation performed on the data of laser points in each layer of grid map includes the coordinate offset operation, and the coordinate offset operation is correspondingly configured with the coordinate offset step size, enabling one candidate solution to correspond to one coordinate offset step size. The robot traverses the multi-layer grid map according to the new coordinate offset step size, and controls the round of position transformation operation corresponding to the currently traversed candidate solution, or the same round of position transformation operation to be configured according to the new coordinate offset step size, thereby performing one round of position transformation operation corresponding to the currently traversed candidate solution on the data of laser points in the grid map of the new resolution. Therefore, in Step B, the robot traverses each layer of grid map in order from low resolution to high resolution, and reduces the coordinate offset step size for the current layer of grid map, so as to adapt to the next layer of grid map, that is, the grid map with higher resolution. The position transformation operation performed on the data of laser points in each layer of grid map includes the coordinate offset operation, and the coordinate offset operation is correspondingly configured with the coordinate offset step size, and the coordinate offset step is proportionally reduced to be represented by one grid. When the quantity of grids used to represent a preset physical size in the grid map is more, the resolution of the grid map is higher; when the quantity of grids used to represent a preset physical size in the grid map is fewer, the resolution of the grid map is lower.

On the basis of the above embodiment, step 3 further includes: upon setting the determined feasible solution as at least one of candidate solutions of the next layer of grid map, setting a target point obtained through performing position transformation operation corresponding to the candidate solution of the next layer of grid map on the data of laser points as the target point obtained through performing one round of position transformation operation corresponding to the currently traversed candidate solution on the data of all laser points as referred to in Step 1, and setting an occupancy probability value corresponding to the target point obtained through performing position transformation operation corresponding to the candidate solution of the next layer of grid map on the data of laser points as the occupancy probability value corresponding to each target point obtained through performing one round of position transformation operation corresponding to the currently traversed candidate solution on the data of all laser points as referred to in Step 1; and returning to Step 1.

Multiple candidate solutions in the next layer of grid map that are set each time by the feasible solution in the current layer of grid map form some candidate solutions in set of the candidate solution as referred to in Step 1. The quantity of candidate solutions set in the next layer of grid map is equal to the product of the ratio of the coordinate offset step size in each coordinate axis direction in the current layer of grid map to the coordinate offset step size in the same coordinate axis direction in the next layer of grid map. In a case where the resolution of the next layer of grid map is higher than the resolution of the current layer of grid map, the ratio of the coordinate offset step size in the abscissa axis direction in the next layer of grid map to the coordinate offset step size in the abscissa axis direction in the current layer of grid map is greater than 1, and the ratio of the coordinate offset step size in the ordinate axis direction in the next layer of grid map to the coordinate offset step size in the ordinate axis direction in the current layer of grid map is also greater than 1. Hence, the quantity of candidate solutions in the next layer of grid map updated by one feasible solution in the current layer of grid map is greater than 1. In this way, each feasible solution in the set of screened feasible solutions in step 2 is repeatedly set as multiple candidate solutions in the next layer of grid map, forming the set of candidate solutions in the next layer of grid map, and in step 3, the set of candidate solutions as referred to as in step 1 is updated to the set of candidate solutions in the next layer of grid map.

On the basis of the above embodiments, in a 1.6m resolution-level grid map, 1.6m is used as a coordinate offset step size to obtain an initial set of candidate solutions. Next, the real-time probability sum value and a predicted probability sum value are calculated for each target point obtained through performing one round of position transformation operations corresponding to the candidate solution on the data of all laser points. The feasible solution or infeasible solution is screened out by determining a difference between the predicted probability sum value and the preset screening threshold. The feasible solution is used as the current optimal solution of the multi-layer grid map, and the infeasible solution is dropped and the calculation of the real-time probability sum value and the predicted probability sum value corresponding to the same candidate solution is stopped. The next layer of grid map is a grid map with a resolution level of 0.8m, and a coordinate offset step size of 0.8m is used. A real-time probability sum value and a predicted probability sum value corresponding to each target point are obtained through the candidate solution in the next layer of grid map, and a feasible solution is screened out determining a difference between the predicted probability sum value and the preset screening threshold. According to the manner of setting the screened feasible solution (also regarded as the current optimal solution in the multi-layer grid map) as the candidate solution in the next layer of grid map in the aforementioned embodiments, the candidate solution in the next layer of grid map is set using the ratio of the resolution of the next layer of grid map and the resolution of the current layer of grid map. For example, a feasible solution (a current optimal solution) in the grid map with a resolution level of 0.8m is updated to 4 candidate solutions in the grid map with a resolution level of 1.6m. In addition, preferably, for the same candidate solution or the same round of position transformation operation, the quantity of target points obtained in the grid map at the 0.8 m resolution level is equal to the quantity of target points obtained in the grid map at the 1.6 m resolution level. In the process of traversing the multi-layer grid map in order from low resolution to high resolution, the robot repeatedly executes Step 1 to Step 3, and recursively searches for a feasible solution or an infeasible solution in the multi-layer grid map until it searches the grid map with a resolution level of 0.05m. A real-time probability sum value and a predicted probability sum value of the data of each laser point corresponding to each target point in the grid map at the 0.05m resolution level are obtained, and an infeasible solution in each layer of grid map are screened out by determining a difference between the predicted probability sum value and the preset screening threshold. The optimal feasible solution is determined in the layer-by-layer search based on the quantity of target points in the same layer of grid map. In addition, in some embodiments, a condition for terminating the search is that no feasible solution can be screened out in the grid map at a resolution level of 0.1m. At this time, the optimal feasible solution is regarded as the feasible solution screened out in the grid map at a resolution level of 0.2m.

As an embodiment, when the robot executes Step 2 in the first layer of grid map, that is, when traversing the first layer of grid map, a feasible solution obtaining module sets a candidate solution in one layer of grid map obtained first as an initial candidate solution, and performs one round of position transformation operation corresponding to the initial candidate solution on the data of laser points to obtain the corresponding target point, including the coordinates of the target point. The target point corresponding to the initial candidate solution is obtained through the corresponding position transformation operation. Next, the robot determines, based on a relationship among the real-time probability sum value of the current target point, the maximum single-point probability value and the preset screening threshold, a feasible solution from the currently determined candidate solutions and sets as the current optimal solution.

In the first layer of grid map, the target point corresponding to the initial candidate solution is obtained through the corresponding position transformation operation. For example, the laser point data is translated in the Cartesian coordinate system of the grid map in the abscissa axis direction and ordinate axis direction to generate a new target point. A translation amount in each of various coordinate axis directions is determined by the corresponding position transformation operation or candidate solution. In some embodiments, the candidate solution is directly used as the pose data of the target point. The target point corresponding to the initial candidate solution and its corresponding occupancy probability value are obtained when the robot executes Step 2 in the first layer of grid map. The target point corresponding to the initial candidate solution obtained when executing Step 1 in the first layer of grid map needs to be stored.

When the robot executes Step 2 in an M-th layer of grid map, each target point and its corresponding occupation probability value obtained by performing one round of position transformation operation corresponding to the currently traversed candidate solution on the data of laser points are selected, where the selected each target point and its corresponding occupation probability value obtained by performing one round of position transformation operation corresponding to the currently traversed candidate solution on the data of laser points are obtained when executing Step 2 to Step 3 in a (M-1)-th layer of grid map, M is greater than or equal to the value 2, and M is less than or equal to the maximum number of layers allowed to be configured in the multiple layers of grid maps. The target point corresponding to the current optimal solution obtained when executing Step 2 in each layer of grid map needs to be stored, including coordinates of the target point corresponding to the current optimal solution and its corresponding occupancy probability value.

It should be noted that the first layer of grid map that the robot obtains from its built-in memory is the data of the first layer of grid map, where the first layer of grid map is the grid map with the lowest resolution in the pre-stored multiple layers of grid maps, and the candidate solutions in the grid map with the lowest resolution are all pre-defined. This reduces the need to repeatedly perform position transformation operation on the same batch of laser points data in multiple layers of grid maps, saving computational effort in the process of searching the maps layer by layer.

It should be noted that, in the multi-layer grid map, the resolution of each layer of grid map is represented by the coordinate offset step size required for performing the coordinate offset operation in the corresponding layer of grid map on the data of laser points. When the resolution of each layer of grid map is different, the coordinate offset step size required for performing the coordinate offset operation in each layer of grid map on the data of laser points is different. In combination with the above embodiments, it is clear that the robot updates the current layer of grid map as referred to in Step 1 to the next layer of grid map as referred to in Step 3, which is as follows. The coordinate offset step size for the next layer of grid map is set as the coordinate offset step size for the current layer of grid map, and the feasible solution obtaining module traverses the multi-resolution grid map according to the new coordinate offset step size, and controls one round of position transformation operation corresponding to the currently traversed candidate solution or the same round of position transformation operation to be configured according to the new coordinate offset step size, so as to perform the round of position transformation operation corresponding to the currently traversed candidate solution the data of laser points in the grid map of the new resolution. In this embodiment, the pose change data involved in one round of position transformation operation that the robot needs to perform on the data of laser points is denoted as one candidate solution of one layer of grid map. The position transformation operation that the laser point data needs to perform in each layer of the grid map include coordinate offset operations, and the coordinate offset operations are correspondingly configured with a coordinate offset step, and the coordinate offset step is preferably proportionally reduced to be represented by the number of grids. The position transformation operation performed on the data of laser points in each layer of grid map includes the coordinate offset operation, and the coordinate offset operation is configured with the coordinate offset step size. The coordinate offset step size is preferably proportionally reduced to be represented by the quantity of grids.

Preferably, in the multi-layer grid map, that is, in the grid map with multiple levels of resolution, the resolution of each layer of grid map (grid map at each resolution level) is represented by the coordinate offset step size required for performing the coordinate offset operation in the corresponding layer of grid map on the data of laser points. A resolution value of each layer of grid map (grid map at each resolution level) is different, and the coordinate offset step size required for performing the coordinate offset operation in each layer of grid map on the data of laser points is different, so as to set the next layer of grid map as the current layer of grid map, which is expressed as: setting the coordinate offset step size for the next layer of grid map to the coordinate offset step size for the current layer of grid map. Therefore, the feasible solution obtaining module traverses each layer of grid map in the order of resolution from low to high, and reduces the coordinate offset step size for the current layer of grid map, so as to adapt to the next layer of grid map, i.e., the grid map with higher resolution. The position transformation operation performed on the data of laser points in each layer of grid map includes the coordinate offset operation, and the coordinate offset operation is correspondingly configured with the coordinate offset step size, and the coordinate offset step is proportionally reduced to be represented by one grid. When the quantity of grids used to represent a preset physical size in the grid map is more, the resolution of the grid map is higher; when the quantity of grids used to represent a preset physical size in the grid map is fewer, the resolution of the grid map is lower.

Optionally, when the robot screens out a feasible solution in the layer of grid map with the highest resolution by executing Step 3, the feasible solution in the layer of grid map with the highest resolution is set as the optimal feasible solution. To this end, when a current position point of the robot is set to the origin of the coordinate system in, the robot sets all feasible solutions in the layer of grid map with the highest resolution screened out in Step 3 as a set of relative postures of the robot, forming a set of repositioning posture data of the robot, where the layer of grid map with the highest resolution is one layer of grid map having the largest number of layers in the multi-layer grid map. Therefore, when the robot's position is set as the origin of the coordinate system of the grid map, via optimal feasible solution, the robot can be relocated to relatively accurate pose information of other points to be relocated, or a pose of data of a laser point currently scanned by the laser sensor in the multi-resolution grid map can be determined. To this end, the global re-localization process is completed, and the global re-localization is considered successful, otherwise the re-localization search fails.

As an embodiment, when the robot executes step 2, the quantity of laser points the data of which the position transformation operation is performed on in the current layer of grid map, and an initial probability sum value are first determined, where the data of laser points that the position transformation operation is performed on in the current layer of grid map is data of laser points collected by the robot in real time at one position point, which may form a batch of point clouds, and the quantity of laser points may be considered as the quantity of laser points the data of which is required for positioning back to a position point. Each time performing one round of position transformation operation corresponding to one of the candidate solutions on the data of one laser point, one target point and its corresponding occupancy probability value are obtained. Each time the occupancy probability value corresponding to one target point is obtained, the obtained occupancy probability value is added to the initial probability sum value to obtain the real-time probability sum value, and the currently obtained real-time probability sum value is set as an initial probability sum value participating in a next summation operation. The initial probability sum value calculated by the robot for the first summation operation is preferably 0. Thus, for the data of each laser point or each target point, the probability sum value information for determining a feasible solution or an infeasible solution is provided.

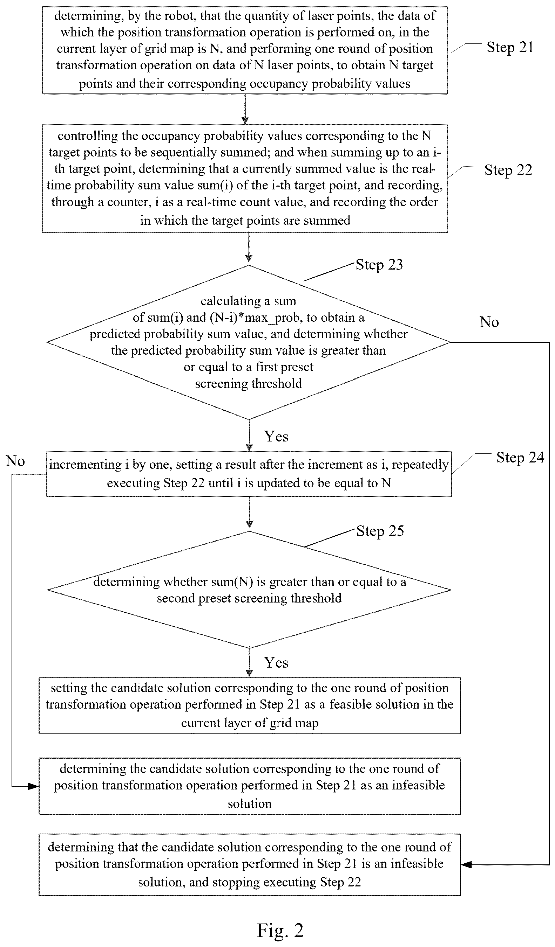

In some embodiments, determining whether the currently traversed candidate solution is a feasible solution or an infeasible solution based on the real-time probability sum value of the current target point and the quantity of target points in Step 2, as shown in Fig. 2, includes the following steps.

Step 21, determining, by the robot, that the quantity of laser points, the data of which the position transformation operation is performed on, in the current layer of grid map is N, and performing one round of position transformation operation on data of N laser points, to obtain N target points and their corresponding occupancy probability values. Then proceed to Step 22.

Step 22: controlling, by the robot, the occupancy probability values corresponding to the N target points to be sequentially summed; and when summing up to an i-th target point, determining that a currently summed value is the real-time probability sum value sum(i) of the i-th target point, and recording, through a counter, i as a real-time count value, and recording the order in which the target points are summed. Then proceed to Step 22. The current target point is the i-th target point, i is greater than or equal to a preset base number and less than or equal to N, and the preset base number is less than or equal to N. N is a positive integer, the preset base number is preferably three quarters of N, and N is typically in the hundreds.

Step 23: calculating, by the robot, a sum of sum(i) and (N-i)*max_prob, to obtain a predicted probability sum value, and determining whether the predicted probability sum value is greater than or equal to a first preset screening threshold; if so, proceeding to Step 24; otherwise, determining that the candidate solution corresponding to the one round of position transformation operation performed in Step 21 is an infeasible solution, excluding it from the set of candidate solutions (it can be removed from the set of candidate solutions), and stopping executing Step 22, i.e., stopping the calculation of sum(i) and (N-i)*max_prob for the occupancy probability value calculation scenario of the candidate solution corresponding to the same round of position transformation operation. Until the round of position transformation operation as referred to in Step 21 is updated to a new round of position transformation operation, it begins executing Step 22. To this end, before i changes to N, that is, before sum(N) is obtained by summation, infeasible solutions are sequentially screened out from the set of candidate solutions of the current layer of grid map. Invalid candidate solutions are excluded in advance through dynamic determining (reflected in that i changes, feeding back to sum(i) and (N-i)*max_prob). It is also convenient to exit the summation operation of Step 22 as soon as an infeasible solution is determined, avoiding the robot from performing too many cumulative calculation operations.

In step 23, each time the robot obtains the occupation probability value corresponding to one target point, the robot controls the currently obtained occupation probability value and the last obtained real-time probability sum value sum(i) to be summed, so as to obtain the real-time probability sum value of the current target point. (N-i)*max_prob is used to represent a dynamic base value that changes with the change of i. A sum of sum(i) and (N-i)*max_prob is considered as a dynamic predicted probability sum value. Since the robot may traverse the multi-resolution grid map layer by layer, the sum of sum(i) and (N-i)*max_prob calculated by the robot in each layer of grid map may be continuously updated.

Step 24: incrementing, by the robot, i by one, setting a result after the increment as i, repeatedly executing Step 22 to control an occupancy probability value corresponding to the new target point and the real-time probability sum value sum(i) of the i-th target point as referred to in Step 22 to be summed, until i is updated to be equal to N, and the real-time probability sum value sum(N) of the N-th target point is obtained. At this point, it does not need to calculate (N-i)*max_prob, so as to save computational effort. The real-time probability sum value sum(i) of the i-th target point outputted by the robot in sequence increases continuously until i is updated to be equal to N, and the real-time probability sum value sum(N) of the N-th target point is obtained. At this point, the count reaches N, and the summation operation with the quantity of target points as one cycle is completed. This can be regarded as completing one traversal or relocation in the current layer of grid map. Then, proceed to execute Step 25.

Step 25: determining whether sum(N) is greater than or equal to a second preset screening threshold, if so, setting the candidate solution corresponding to the one round of position transformation operation performed in Step 21 as a feasible solution in the current layer of grid map; otherwise, determining the candidate solution corresponding to the one round of position transformation operation performed in Step 21 as an infeasible solution, excluding it from the set of candidate solutions (it can be removed from the set of candidate solutions). The first preset screening threshold is less than the second preset screening threshold, thereby improving the accuracy of feasible solution screening.

Specifically, the robot determines whether the predicted probability sum value sum(N) is greater than or equal to the second preset screening threshold. If so, it determines that the candidate solution corresponding to the round of position transformation operation performed in Step 21 is a feasible solution in the current layer grid map. Assuming negligible probability errors, it is considered as completing one re-localization in the current layer of grid map. Otherwise, it determines that the candidate solution corresponding to the round of position transformation operation performed in Step 21 is an infeasible solution, thereby realizing the use of a more accurate threshold as a screening criterion to accurately determine that the candidate solution corresponding to each target point in each layer of grid map is a feasible solution or an infeasible solution.

It should be noted that, max_prob is a maximum single-point probability value, the single-point probability maximum value, a summation sequence, the quantity of summations, the first preset screening threshold, the second preset screening threshold, and the preset base number are all predefined, to facilitate the robot to directly call relevant parameters for determining operations. Preferably, the first preset screening threshold and the second preset screening threshold set in each layer of grid map are also updated, so as to adapt to changes in map resolution and changes in the quantity of feasible solutions. Alternatively, the first preset screening threshold, the second preset screening threshold and max_prob remain unchanged when traversing each layer of grid map.

In summary, the robot uses corresponding thresholds as screening criteria in different calculation and determining stages to determine the feasible solutions and infeasible solutions from the set of candidate solutions in each layer of grid map. Through the cyclic search manner disclosed in Step 1 to Step 3 and Step 21 to Step 25, it is able to exclude invalid candidate solutions in the next traversed grid map in advance when searching in each layer of grid map, reduce the quantity of repeated summation calculations in Step 22, and improve the positioning speed of the robot in the multi-layer grid map.

Based on the above embodiments, each time the occupancy probability value corresponding to the i-th target point in the current layer of grid map is controlled to be summed to obtain sum(i), the same round of position transformation operation is performed on data of other laser points in the data channel where the i-th target point is located, to obtain a (i+1)-th target point. As can be appreciated, when traversing the current layer of grid map, the sequence of the laser point the data of which the position transformation operation is currently performed on is the same with the sequence of the (i+1)-th target point, and is also same with the sequence of the current round of position transformation operation. Moreover, the round of position transformation operation corresponding to the i-th target point and the round of position transformation operation corresponding to the (i+1)-th target point are the same round of position transformation operation, so that the data of N laser points are configured to perform one round of position transformation operation, and the corresponding N target points are controlled to perform summation operations in sequence, and the corresponding real-time probability sum value are generated in real time, and the infeasible solution and the feasible solution are determined in real time.

When it is determined in the current layer of grid map that the candidate solution corresponding to the current round of position transformation operation is an infeasible solution, the summation of the occupation probability value corresponding to the (i+1)-th target point and sum(i) is stopped. The robot also stops calculating a sum of sum(i) and (N-i)*max_prob, does not perform the same round of position transformation operation on data of other undetermined laser points in the data channel where the i-th target point is located, and stops calculating sum(i+1), as well as a sum of sum(i+1) and (N-i-1)*max_prob. It is considered as stopping executing Step 22, so as to reduce the amount of invalid calculation. In addition, a new round of position transformation operation is triggered to be set as the same round of position transformation operation, that is, controlling to perform the new round of position transformation operation on the data of N laser points in a data channel where N laser points are located, which are located in the current layer of grid map, until all candidate solutions in the set of candidate solutions of the current layer of grid map are traversed, and it is determined that the infeasible solution is excluded from the set of candidate solutions of the current layer of grid map. Of course, it may also trigger performing a new round of position transformation operation in the next layer of grid map on the data of N laser points in the data channel where N laser points are located.

In the embodiment of Step 21 to Step 25, after determining that the candidate solution corresponding to the one round of position transformation operation performed in Step 21 is an infeasible solution through executing Step 23, the robot sets a new round of position transformation operation as the one round of position transformation operation as referred to in Step 21, and repeatedly executes Step 21 to Step 25 to perform the new round of position transformation operation on the data of N laser points, until all candidate solutions in the current layer of grid map are traversed and position transformation operations corresponding to all candidate solutions in the current layer of grid map have been performed on the data of N laser points. Next, the robot begins to traverse candidate solutions in the next layer of grid map, and the robot sets the next layer of grid map as the current layer of grid map as referred to in Step 1 according to the implementation disclosed in Step 1 to Step 3. The robot repeatedly executes Step 1 to Step 3 until traversing to the grid map with the highest resolution and a set of feasible solutions is screened out from it, or when the quantity of feasible solutions screened out in the current layer of grid map is zero, the newly screened set of feasible solutions is set as the optimal feasible solution set, thereby completing the traversal and repositioning of the multi-layer grid map.

Preferably, for the layer of grid map currently traversed by the robot, in the process of sequentially adding the occupation probability values corresponding to N target points, after traversing from the occupation probability value corresponding to the first target point to the occupation probability value corresponding to the Nth target point, if there is no feasible solution among the candidate solutions corresponding to the N target points, it is determined that there is no feasible solution in the current layer of grid map, and the robot stops the execution of Step 1, Step 2, Step 3 and Step 4, and sets the feasible solution screened out last time as re-localization pose data of the robot, that is, the current optimal solution is set as the re-localization pose data of the robot, which is also used as the re-localization result of the robot. Alternatively, for the layer of the grid map currently traversed by the robot, data of laser point corresponding to the largest positioning probability sum value is selected from the data of all laser points for positioning back to one position point as the re-localization pose data of the robot. N represents the quantity of laser points the data of which is required for positioning back to one position point. Thus, the stopping execution condition of the robot positioning method is determined and the relatively accurate re-localization result of the robot is determined using the probability sum value.

It should be appreciated that, one target point and its corresponding occupancy probability value in one layer of grid map obtained through performing one round of position transformation operation corresponding to one candidate solution on data of each laser point, and a matching relationship between the obtained one target point and its corresponding occupancy probability value is predefined. For data of the same laser point, a matching relationship between one target point and one round of position transformation operation is predefined, so that the robot can call it in advance, specifically, it can be read from the built-in memory. In this embodiment, the occupancy probability value corresponding to one target point is used to indicate a probability that a position point to be repositioned falls into a grid corresponding to the target point in one layer of grid map. The robot is equipped with at least one laser sensor, and the data of all the laser points are the data of laser points located in the current detection region collected by the laser sensor, the robot is located in the current detection region, and the position point to be repositioned includes the current position point of the robot. In specific, a sum of occupancy probability values corresponding to respective target points obtained through performing the same round of position transformation operation on the data of all laser points is sum(N), and is used to indicate a probability that a position point of the robot to be repositioned falls into a position drift range generated by performing one round of position transformation operation in one layer of grid map, and the position point to be repositioned includes the current position point of the robot.

As a way to evaluate the probability value of the robot falling into a position in the current detection region, the sum of the occupancy probability values corresponding to respective target points obtained through performing the same round of position transformation operation on the data of all laser points corresponds to sum(i) in the aforementioned embodiments, which may be used to indicate the probability that the position point of the robot to be repositioned falls into the position drift range generated by performing one round of position transformation operation in one layer of grid map. When i is equal to the quantity of all laser points the data of which are collected by the laser sensor, the quantity of position transformation operations required to be performed in grid maps of different resolutions is not necessarily different. It may be the same round of position transformation operation, but it is the corresponding position transformation operation that is performed on the same batch data of laser points in the grid maps of different resolutions. Moreover, the coverage of the current detection region includes: a region of position drift region generated in the angles and coordinate axis directions corresponding to all rounds of position transformation operations required to be performed on the data of all laser points in the current layer of grid map. The corresponding position transformation operations performed in each resolution grid map can be regarded as being filtered out from all rounds of position transformation operations required to be performed in the first layer of grid map.

It should be appreciated that, each layer of grid map is a map tile generated within an effective detection range of the laser sensor, and the effective detection range of the laser sensor covers the current detection region. Each layer of grid map is a map tile of preset size, used to indicate a region within the effective detection range of the laser sensor, covering the position drift range generated at various angles and coordinate axis directions. In the same layer of grid map, one candidate solution corresponding to one round of position transformation operation is a combination of an angle and coordinates, or a combination of an angle deflection amount and a coordinate offset amount, so that, based on the difference in resolution, the feasible solution obtaining module obtains a region in a relatively high resolution grid map corresponding to a coordinate offset amount of one feasible solution from the lowest resolution grid map. The quantity of grids contained in the relatively high resolution grid map is greater than the quantity of grids used to represent the coordinate offset amount of one feasible solution in the lowest resolution grid map.

Preferably, the map tile is a local map of a preset size configured according to a re-localization algorithm used in the current scenario, and is the grid map within the effective detection range of the laser probe. When the laser sensor is moved to a new position, the effective detection range of the laser sensor is updated, so that the information of the map tile configured by the re-localization algorithm also changes. One target point represents a coordinate position obtained by performing one round of position transformation operation relative to the origin of the coordinate system in the map tile. The position transformation operation is used to obtain a grid position and its occupancy probability value of the position point to be repositioned determined through indexing in one layer of grid map, and obtain more detailed probability results in higher-resolution grid maps through screening layer by layer. The target point and its corresponding occupancy probability value obtained by the robot performing one round of position transformation operation starting from the origin of the coordinate system of the map tile may reflect the robot's pose.

As another way to evaluate the probability value of the robot falling into a position in the current detection region, for the data of each laser point required to locate a position point to be repositioned in the current detection region, the positioning probability sum value corresponding to the data of the same laser point is used to indicate a probability that the current position of the robot falls into the grid corresponding to the data of the same laser point in one layer of grid map. It should be emphasized that a partial environment map is taken as an example in the embodiments of this application, that is, the current position of the robot is used as the origin, and the grid map with each resolution level is generated within the effective search range of the set laser sensor. Considering that the laser beam emitted by the laser sensor has a certain range, that is, it can only scan a region within a certain range, preferably, when determining the search range, the range of the laser beam can be used as a basis, and one layer of grid map may be generated within a range of 5 meters in front, behind, left and right of the autonomous mobile device. When the robot experiences a localization loss, there is a certain deviation in the current pose. Thus, in this embodiment, one round of position transformation operation is performed based on the current pose according to the set angle deflection amount and coordinate offset amount, to form a corresponding candidate solution. When the robot moves, there is a certain drift error based on the current pose. To this end, in this embodiment, it performs a grid position transformation operation on the basis of the current pose according to the coordinate offset amount and angle deflection amount set on the environment map, to obtain the transformed robot's pose information. The candidate solution may then be used to reposition the pose information in one layer of the grid map. The positioning probability sum value is used to indicate a probability of the robot being accurately positioned at a position on the grid map of one layer. The larger the positioning probability sum value, the greater the probability of the robot being accurately positioned at the position on the grid map of one layer. Therefore, when the robot processes data of all the preset quantity of laser points collected by the laser sensor at one time into all the positioning probability sum values for positioning the robot, the re-localization algorithm in the prior art can select data of laser point corresponding to the largest positioning probability sum value therefrom as the re-localization result, that is, the restored position is located on one layer of grid map in units of data of the preset quantity of laser points.

Taking the current position point of the laser sensor as the origin of the coordinate system, one layer of grid map is generated within the effective detection range of the laser sensor. The data of the preset quantity of laser points is a batch of laser point data obtained by the robot using the laser radar to perform a full 360-degree scan at the current position point, which can be denoted as laser point data.

Optionally, when determining the occupancy probability value in a region of the environment map, the environment map may be processed to obtain the corresponding grid map, and positioning probabilities corresponding to obstacles in the grid map may follow a normal distribution. Each grid length in the grid map has a corresponding coordinate range, which may be expressed as map resolution. The environment map includes obstacles and blank regions. After the grid map is determined, it may be stored, so that it may be used directly the next time positioning recovery is performed. On this basis, according to the current pose of the robot, the position of the robot in the grid map may be determined. The sum of the occupancy probability values of the corresponding grid points (the target points that the robot may drift to) scanned by the laser probe may be considered as the sum of the occupancy probability values corresponding to the target points obtained by the required/existing position transformation operation corresponding to the candidate solution in the current layer of grid map on the data of one laser point, that is, the positioning probability sum value, or considered as the sum of the occupancy probability values of all target points obtained according to multiple laser points in coordinate offset operations of the same type and angle deflection operations of the same type.

In some embodiments, when determining the re-localization pose data of the robot by using laser point data corresponding to the positioning probability sum value, the positioning probability sum value is calculated in the following manner. When the robot traverses to the grid map with the highest resolution and screens out a feasible solution therefrom, for the data of each laser point required for locating back a position point, the target point for calculating the positioning probability sum value corresponding to the laser point data is the target point obtained by determining the current optimal solution (i.e., after performing the corresponding position transformation operation) for the data of laser point in the grid map with the highest resolution. It is determined that the occupancy probability value corresponding to the target point for calculating the positioning probability sum value corresponding to the data of one laser point is the occupancy probability value corresponding to the target point that corresponds to the current optimal solution last determined in Step 3. The feasible solution screened out by the robot in the grid map with the highest resolution is the optimal feasible solution, and there may be multiple optimal feasible solutions in the same layer of grid map, and the grid map with the highest resolution is the grid map layer where the optimal feasible solution is located when the robot executes Step 3. Next, the robot controls the occupancy probability values corresponding to the target points obtained by all the current optimal solutions in the highest- resolution grid map based on the data of the same laser point to be summed, to obtain the positioning probability and value corresponding to the data of the same laser point. The robot selects data of laser point corresponding to the largest positioning probability sum value from the data of all laser points required to re-localize to one position point as the robot's repositioning pose data, including the coordinates and angle information of the laser point. In the case of executing step 3, when the quantity of feasible solutions screened out by the robot in the current layer of grid map is zero, the robot determines that the quantity of feasible solutions is zero by repeatedly executing step 2 in one layer of grid map. Next, the robot retrieves the feasible solution screened out in the previous layer of grid map and sets it as the optimal feasible solution, and the previous layer of grid map is the layer of grid map where the optimal feasible solution is located when the robot executes Step 3. The robot controls the occupancy probability values corresponding to all target points obtained by determining the feasible solution in the previous layer of grid map based on the data of the same one laser point to be summed up, to obtain the positioning probability sum value corresponding to the data of the same one laser point. Next, the robot selects data of laser point corresponding to the largest positioning probability sum value from the data of all laser points required to re-localize to one position point as the robot's repositioning pose data. In summary, based on the resolution level and the quantity of feasible solutions of the traversed layer of grid map, the robot is controlled to determine the grid map where the optimal feasible solution is located through traversing the layers of grid maps in order from low resolution to high resolution layer by layer, and calculates the positioning probability sum value corresponding to the data of each laser point accordingly. Hence, the robot's re-localization pose data is formed in the grid map where the optimal feasible solution is located, thereby reducing the ineffective traversal time of the grid map.

The previous layer of grid map is the layer of grid map obtained last time. The quantity of candidate solutions in the previous layer of grid map is greater than the quantity of candidate solutions in the current layer of grid map. The quantity of candidate solutions included in the previous layer of grid map is greater than the quantity of candidate solutions included in the current layer of grid map. One round of position transformation operation required to generate one target point for the data of one laser point in the previous layer of grid map corresponds to one candidate solution, and the resolution of the previous layer of grid map is lower than the resolution of the current layer of grid map.

It should be noted that, for the data of one laser point, all target points corresponding to the data of one laser point are all target points obtained by performing position transformation operations corresponding to all candidate solutions in the same layer of grid map on the data of one laser point. One positioning probability sum value that is configured to correspond to the data of each laser point required to re-localize to one position point may be the sum of the occupancy probability values corresponding to the target points obtained by performing position transformation operations corresponding to all candidate solutions in the same layer of grid map on the data of one laser point, or the sum of the occupancy probability values corresponding to the target points obtained by performing position transformation operations corresponding to all feasible solutions in the same layer of grid map on the data of one laser point.

As an embodiment of the position transformation operation, new reference coordinates are obtained during each time of performing the angle deflection operation on data of the same one laser point, coordinate offset operation is performed on the new reference coordinates, and new target offset coordinates are obtained and the corresponding occupancy probability values are determined by indexing. One round of position transformation operation corresponding to one candidate solution includes the angle deflection operation and the coordinate offset operation. The coordinate offset operation includes the abscissa offset operation and the ordinate offset operation. The same round of position transformation operation refers to angle deflection operations of the same type and coordinate offset operations of the same type.

In the first layer of grid map, the quantity of times for performing the angle deflection operation on the data of the same one laser point is predefined, and the quantity of times for performing the coordinate offset operation on the same reference coordinate is predefined. It may be configured that during the execution of Step 1 in the first layer of grid map, the first round of position transformation operation is performed on the data all laser points, so as to provide the initial pose data for the repeated execution of Step 1 to Step 3 or Step A to Step E. The layer of grid map obtained by the robot at the first time refers to the map data of the obtained first layer of grid map, where the first layer of grid map obtained by the robot is the grid map with the lowest resolution, and the candidate solutions in the grid map with the lowest resolution are all predefined. The quantity of angle deflection operations or the quantity of angle deflections included in one round of position transformation operation is greater than or equal to 1, and the quantity of coordinate offset operations or the quantity of coordinate offset occurrences included in one round of position transformation operations is greater than or equal to 1. Preferably, the one of angle deflection operations included in one round of position transformation operation is equal to the quantity of coordinate offset operations included in the same round of position transformation operation. Based on the same batch of data of laser points collected by the robot, the pose data required to provide the corresponding candidate solutions for traversing the grid maps layer by layer is realized.

As an embodiment, the angle deflection operations of the same type have the same quantity of deflections, the coordinate offset operations of the same type include abscissa offset operations of the same type and ordinate offset operations of the same type, so that, in the same layer of grid map, after performing the angle deflection operations of the same type and the coordinate offset operations of the same type, obtained target points have the same pose relationship relative to the data of the same one laser point before performing the current round of position transformation operation; where angle deflection amount in the angle deflection operations of the same type and coordinate offset amount in the coordinate offset operations of the same type form the candidate solution disclosed in the aforementioned embodiments, specifically one candidate solution. In the same layer of grid map, when the angle deflection operations of the same type and the coordinate offset operations of the same type are represented by the same round of position transformation operation, the angle deflection operations of the same type have the same quantity of deflections, the coordinate offset operations of the same type include coordinate offset operations having the same quantity of abscissa offset occurrences and coordinate offset operations having the same quantity of ordinate offset occurrences. The abscissa offset operation includes performing one abscissa offset in the abscissa axis direction, and the ordinate offset operation comprises performing one ordinate offset in the ordinate axis direction.

Therefore, the abscissa offset operations of the same type requires same quantity of coordinate offset occurrences (relative to the first offset occurrence in the abscissa axis direction), and have the same coordinate offset direction (for example, specified in a positive direction of the abscissa axis or a negative direction of the abscissa axis), so that the abscissa offset operations of the same type generates the same coordinate offset on the abscissa axis. The ordinate offset operations of the same type requires same quantity of coordinate offset occurrences (relative to the first offset occurrence in the ordinate axis direction), and have the same coordinate offset direction (for example, specified in a positive direction of the ordinate axis or a negative direction of the ordinate axis).

It should be noted that, for data of different laser points, the angle deflection operations of the same type require the same deflection direction and the same quantity of current deflection operations, and the same set of angle deflection operation formulas (including trigonometric functions) can be applied. In this application, a feasible solution in the next layer of grid map is set based on the candidate solutions in the first layer of grid map, the screening of feasible solutions is specified through searching the grid maps layer by layer, and the candidate solution in the previous layer of grid map is reused. Thus, in addition to searching for the feasible solution in the first layer of grid map, the same set of angle deflection operation formulas (including trigonometric functions) are used to perform trigonometric function calculation to obtain each target point. In each layer of grid map subsequently read with a resolution level higher than that of the first layer of grid map, the corresponding target points that have been calculated are directly called. Furthermore, since a storage array stores trigonometric function values in advance, when performing trigonometric function calculations on the data of laser points in the first layer of grid map, the trigonometric function values can be directly called to perform simple addition and multiplication operations. This saves computation time for trigonometric functions when relocating each grid map.

On the basis of the above embodiments, the quantity of abscissa offset occurrences of the abscissa offset operations of the same type in one layer of grid map with a relatively high resolution is greater than the quantity of abscissa offset occurrences of the abscissa offset operations of the same type in one layer of grid map with a relatively low resolution. This may indicate that, for the abscissa offset operations of the same type, the magnitude of shift, measured in quantity of grids, in the abscissa axis direction is larger in the layer of grid map with relatively high resolution than in the layer of grid map with relatively low resolution. The resolution level of the layer of grid map with relatively high resolution (which may be represented by an inverse of the coordinate offset step size) is higher than that of the layer of grid map with relatively low resolution (which may be represented by an inverse of the coordinate offset step size). A coordinate offset step size for performing the abscissa offset operations of the same type on the data of laser points in one layer of grid map with a relatively low resolution is greater than a coordinate offset step size for performing the abscissa offset operations of the same type on the data of laser points in one layer of grid map with a relatively high resolution. An offset amount of the abscissa offset operations of the same type along the abscissa axis direction in one layer of grid map with a relatively high resolution is equal to an offset amount of the abscissa offset operations of the same type along the abscissa axis direction in one layer of grid map with a relatively low resolution.

The quantity of ordinate offset occurrences of the ordinate offset operations of the same type in one layer of grid map with a relatively high resolution is greater than the quantity of ordinate offset occurrences of the ordinate offset operations of the same type in one layer of grid map with a relatively low resolution. This may indicate that, for the ordinate offset operations of the same type, the magnitude of shift, measured in quantity of grids, in the ordinate axis direction is larger in the layer of grid map with relatively high resolution than in the layer of grid map with relatively low resolution. The resolution level of the layer of grid map with relatively high resolution (which may be represented by an inverse of the coordinate offset step size) is higher than that of the layer of grid map with relatively low resolution (which may be represented by an inverse of the coordinate offset step size). A coordinate offset step size for performing the ordinate offset operations of the same type on the data of laser points in one layer of grid map with relatively low resolution is greater than a coordinate offset step size for performing the ordinate offset operations of the same type on the data of laser points in one layer of grid map with relatively high resolution. An offset amount of the ordinate offset operations of the same type along the ordinate axis direction in one layer of grid map with relatively high resolution is equal to an offset amount of the ordinate offset operations of the same type along the ordinate axis direction in one layer of grid map with relatively low resolution.

Based on the above embodiments, the coordinate offset step size for performing the abscissa offset operations of the same type on the data of laser points in one layer of grid map with relatively low resolution is a first lateral step size, and the coordinate offset step size for performing the abscissa offset operations of the same type on the data of laser points in one layer of grid map with relatively high resolution is a second lateral step size. The coordinate offset step size for performing the ordinate offset operations of the same type on the data of laser points in one layer of grid map with relatively low resolution is a first longitudinal step size, and the coordinate offset step size for performing the ordinate offset operations of the same type on the data of laser points in one layer of grid map with relatively high resolution is a second longitudinal step size. After performing the abscissa offset operations of the same type and the ordinate offset operations of the same type on the data of laser points, the same candidate solution is configured from one layer of grid map with relatively low resolution to one layer of grid map with relatively high resolution, the quantity of candidate solutions divided in one layer of grid map with relatively high resolution is equal to a product between a ratio of the first lateral step size to the second lateral step size (which may denoted as an offset step ratio in the abscissa axis direction) and a ratio of the first longitudinal step size to the second longitudinal step size (which may denoted as an offset step ratio in the ordinate axis direction). On this note, the same batch of data of laser points does not necessarily have fewer candidate solutions in the layer of grid map with relatively high resolution, because one feasible solution in the layer of grid map with relatively high resolution is divided into multiple candidate solutions in the layer of grid map with relatively high resolution based on the resolution ratio. The dividing is specifically based on the ratio of the coordinate offset step size in the abscissa axis direction to the coordinate offset step size in the ordinate axis direction, which is caused by the difference in coordinate offset step size or resolution in different layers of grid maps. Hence, it is able to set one feasible solution in the current layer of grid map as multiple candidate solutions in the next layer of grid map in Step 3, and each feasible solution in the current layer of grid map is sequentially set as multiple candidate solutions in the next layer of grid map according to the resolution difference, until a set of candidate solutions in the next layer of grid map is formed, and it is determined that the set of candidate solutions as referred to in Step 1 is updated with the screened set of candidate solutions.

For example, when the resolution of the next-layer of grid map is twice that of the current layer of grid map, one feasible solution of the current layer of grid map may be divided into four candidate solutions in the next layer of grid map. Specifically, the quantity of abscissa offset occurrences of the abscissa offset operations of the same type in the current layer of grid map is 1, and one abscissa offset occurrence requires a first abscissa offset step size in the current layer of grid map. After updating to the candidate solutions of the next layer of grid map, the quantity of abscissa offset occurrences of the abscissa offset operations of the same type in the current layer of grid map is 2, one abscissa offset occurrence requires a second abscissa offset step size in next layer of grid map, and a ratio of the first abscissa offset step size to the second abscissa offset step size is equal to 2. In analogy to the above, the quantity of ordinate offset occurrences of the ordinate offset operations of the same type in the current layer of grid map is 1, and one ordinate offset occurrence requires a first ordinate offset step size in the current layer of grid map. After updating to the candidate solutions of the next layer of grid map, the quantity of ordinate offset occurrences of the ordinate offset operations of the same type in the current layer of grid map is 2, one ordinate offset occurrence requires a second ordinate offset step size in next layer of grid map, and a ratio of the first ordinate offset step size to the second ordinate offset step size is equal to 2. Therefore, the quantity of candidate solutions in the next layer of grid map divided from the feasible solution in the current layer of grid map is equal to the product of the ratio of the first abscissa offset step size to the second abscissa offset step size and the ratio of the first ordinate offset step size to the second ordinate offset step size. When dividing into the appropriate quantity of candidate solutions based on the difference in step sizes for coordinate offset between maps of different resolution levels, and updating to the candidate solutions of the grid map with a higher resolution, one feasible solution in the grid map with a relatively low resolution is divided into multiple candidate solutions. Correspondingly, the abscissa offset step size is reduced by the ratio of the first abscissa offset step size to the second abscissa offset step size, the ordinate offset step size is reduced by the ratio of the first ordinate offset step to the second ordinate offset step size, and the quantity of offset occurrences increases. Accordingly, the quantity of coordinate offset operations increases, and the quantity of candidate solutions increases, thereby increasing the quantity of candidate solutions in the grid map with higher resolution.

Preferably, one round of position transformation operation includes: when performing the angle deflection operation each time, a position transformation processing module performs one coordinate offset operation on the corresponding reference coordinate in one coordinate axis direction, and performs one coordinate offset operation on the corresponding reference coordinate in the other coordinate axis direction. When one coordinate axis direction is the abscissa axis direction, and the other coordinate axis direction is the ordinate axis direction, it indicates that the abscissa offset operation is performed first, and then the ordinate offset operation is performed. Alternatively, when one coordinate axis direction is the ordinate axis direction, the other coordinate axis direction is the abscissa axis direction, it indicates that the ordinate offset operation is performed first, and then the abscissa offset operation is performed. In the coordinate system of each layer of grid map, one coordinate axis direction is perpendicular to the other coordinate axis direction. One abscissa offset operation and one ordinate offset operation collectively represent the coordinate offset operation of one round of position transformation operation. In some embodiments, the position transformation processing module performing one round of position transformation operation includes: each time the position transformation processing module performs one angle deflection operation, the position transformation processing module performs one coordinate offset operation on the corresponding reference coordinate in one coordinate axis direction, and performs one coordinate offset operation on the corresponding reference coordinate in the other coordinate axis direction, to form one abscissa offset operation and one ordinate offset operation, which is considered as forming one coordinate offset operation.

When traversing target points in the grid map or performing at least one round of position transformation operation, the maximum quantity of grids allowed to be accommodated in the abscissa axis direction of the grid map is preferably greater than or equal to a product of the maximum quantity of offset occurrences allowed for the same reference coordinate in the abscissa axis direction of the grid map and an abscissa offset step size; and the maximum quantity of grids allowed to be accommodated in the ordinate axis direction of the grid map is preferably greater than or equal to a product of the maximum quantity of offset occurrences allowed for the same reference coordinate in the ordinate axis direction of the grid map and an ordinate offset step size.

Based on the above-mentioned embodiments, a chip is further disclosed, which is configured to execute the robot positioning method based on the multi-layer grid map in any of the above-mentioned embodiments, to enable the chip to recursively determine whether each of candidate solutions of multiple layers of grid map in order from low resolution to high resolution is a feasible solution, until an optimal feasible solution is determined, and set the optimal feasible solution as the re-localization result. Specifically, the robot where the chip is located is controlled to search for the optimal feasible solution in the multi-layer grid map, which serves as the re-localization result of the robot. During the specific implementation process, no matter whether a feasible solution or an infeasible solution is searched, the computing device can be stopped in time for further cumulative calculation, so as to reduce the time of invalid calculation. This application is applicable for processing large batch of successive frame grid image data and laser point data collected in real time, so as to speed up the processing speed of hardware resources in the chip.

Based on the above-mentioned embodiments, a laser robot is further disclosed. The laser robot is a robot equipped with the laser sensor, and is a mobile robot used to perform laser navigation operation and establish maps using laser point clouds, that is, the robot disclosed in the above-mentioned embodiments of the robot positioning method based on the multi-layer grid map. The chip disclosed in the above-mentioned embodiment is disposed inside the laser robot, and the chip is electrically connected to the laser sensor. The laser sensor is a laser radar that can rotate 360 degrees. The laser radar has a built-in laser probe and a motion rotation mechanism. The motion rotation mechanism can support 360-degree rotation of the laser probe. To this end, under the drive of the motion rotation mechanism, the laser probe revolves around the rotation center of the laser radar, and each rotation obtains the data of laser points, that is, a set of laser points formed around the laser probe. The data of laser points scattered in the map tile are all necessary data for positioning. When a target position to be positioned is lost in the map, the positioning of the target position needs to be restored. The laser sensor of the laser robot collects the data of laser points in the current detection region. The laser robot stores the grid maps of the current detection region at multiple resolutions, and configures the grid maps at multiple resolutions into the multi-layer grid map arranged in order from low resolution to high resolution. This application addresses the issue of large amount of re-localization calculations in traversing the maps with multiple resolutions and is applicable for processing large batch of successive frame grid image data and laser point data collected in real time. Moreover, when the currently traversed candidate solution is a feasible solution, the robot continues to traverse a layer of grid map with a higher resolution, allowing the robot to initiate searches from positions with high probability in the layer of grid map having the corresponding resolution. This reduces the computational load and search space associated with traversing the layers of grid maps with relatively high resolution, thereby improving search speed.

As can be appreciated, the above embodiments are merely used to illustrate the technical solutions of this application, but shall not be construed as limiting this application. As can be appreciated by a person skilled in the art, although this application has been described in detail with reference to the foregoing embodiments, any modifications or variations of the technical solutions in the aforementioned embodiments, or equivalent replacements of part of the technical features within the scope of the disclosed technology, may still be made by those skilled in the art. These modifications, variations or replacements do not make the essence of the corresponding technical solutions depart from the spirit and scope of the technical solutions of the embodiments of this application.

## Claims

1. A robot positioning method based on a multi-layer grid map, comprising:
collecting, by a robot, data of laser points by using a laser sensor;
obtaining, by the robot, multiple layers of grid maps layer by layer in order from low resolution to high resolution; wherein the multiple layers of grid maps are grid maps with multiple resolution levels, and each layer of grid map is configured with one corresponding resolution level;
traversing, by the robot, candidate solutions in a current layer of grid map, and controlling a plurality of occupancy probability values obtained correspondingly for the data of laser points at a currently traversed candidate solution to be sequentially summed, to obtain a real-time probability sum value;
determining, by the robot based on the currently calculated real-time probability sum value, whether the currently traversed candidate solution is a feasible solution or an infeasible solution;
controlling, by the robot, the plurality of occupancy probability values obtained correspondingly for the data of laser points at the currently traversed candidate solution to stop being summed when the robot determines that the currently traversed candidate solution is a feasible solution; setting, based on a ratio of a resolution of a next layer of grid map to a resolution of the current layer of grid map, the determined feasible solution as a candidate solution of the next layer of grid map; recursively determining feasible solutions among candidate solutions of the layers of grid map in order from low resolution to high resolution until an optimal feasible solution is determined, and setting the optimal feasible solution as a re-localization result of the robot; and
controlling, by the robot, the plurality of occupancy probability values obtained correspondingly for the data of laser points at the currently traversed candidate solution to stop being summed when the robot determines that the currently traversed candidate solution is an infeasible solution; setting a next candidate solution as the currently traversed candidate solution, wherein the next candidate solution is from one or more candidate solutions in the next layer of grid map or one or more untraversed candidate solutions in the current layer of grid map; controlling a plurality of occupancy probability values obtained correspondingly for the data of laser points at the updated currently traversed candidate solution to be sequentially summed, to obtain a real-time probability sum value, and continuing determining, based on the currently calculated real-time probability sum value, whether the updated currently traversed candidate solution is a feasible solution or an infeasible solution.

2. The robot positioning method according to claim 1, wherein, during the robot recursively determining feasible solutions in candidate solutions of the layers of grid maps in the order from low resolution to high resolution, the robot positioning method further comprises:
setting, by the robot, a determined feasible solution in a last layer of grid map as the optimal feasible solution when a candidate solution in the last layer of grid map is determined to be the feasible solution, and setting the optimal feasible solution as the re-localization result; wherein the last layer of grid map is a layer of grid map with a highest resolution searched by the robot according to the order from low resolution to high resolution, based on updating the feasible solution of the current layer of grid map as the candidate solution of the next layer of grid map; and
setting, by the robot, a determined feasible solution in a (S-1)-th layer of grid map as the optimal feasible solution when all candidate solutions in an S-th layer of grid map are determined not to be feasible solutions, and a candidate solution in the (S-1)-th layer of grid map is determined to be the feasible solution; and setting the optimal feasible solution as the re-localization result; wherein S is an integer greater than 1, S is less than or equal to the maximum number of layers allowed to be configured in the multiple layers of grid maps, and the (S-1)-th layer of grid map is a previous layer of grid map.

3. The robot positioning method according to claim 2, wherein the laser sensor of the robot collects the data of laser points located in a current detection region; the robot stores grid maps of the current detection region at multiple resolution levels, and configures the grid maps at multiple resolutions as multiple layers of grid maps arranged in the order from low resolution to high resolution;
wherein each layer of grid map is a map tile generated within an effective detection range of the laser sensor of the robot; wherein the current detection region is represented as: a region of position drift region formed by angles and coordinates corresponding to all rounds of position transformation operations required to be performed on the data of all laser points in the current layer of grid map;
wherein, in one layer of grid map, each candidate solution to be traversed is a combination of an angle and coordinates to be traversed; and one candidate solution corresponds to one round of position transformation operation; wherein one target point is obtained by performing one round of position transformation operation on data of one laser point in one layer of grid map, one target point is configured with one occupancy probability value; and it is determined that the data of one laser point obtains correspondingly one occupancy probability value at one candidate solution.

4. The robot positioning method according to claim 3, wherein one round of position transformation operation corresponding to one candidate solution comprises an angle deflection operation and a coordinate offset operation; wherein the coordinate offset operation comprises an abscissa offset operation and an ordinate offset operation; wherein the same round of position transformation operation refers to angle deflection operations of the same type and coordinate offset operations of the same type;
wherein one round of position transformation operation comprises: performing angle deflection operation on the data of one laser point, performing coordinate offset operation on the data of one laser point in one coordinate axis direction, and performing coordinate offset operation on the data of one laser point in the other coordinate axis direction, to obtain one target point, thereby transforming the data of one laser point into one target point through one round of position transformation operation; wherein one target point is configured with one occupancy probability value in one layer of grid map;
wherein, when the one coordinate axis direction refers to an abscissa axis direction, the other coordinate axis direction refers to an ordinate axis direction, it represents that the abscissa offset operation is performed first and the ordinate offset operation is then performed;
wherein, when the one coordinate axis direction refers to an ordinate axis direction, the other coordinate axis direction refers to an abscissa axis direction, it represents that the ordinate offset operation is performed first and the abscissa offset operation is then performed.

5. The robot positioning method according to claim 4, comprising:
Step 1: traversing the candidate solutions in the current layer of grid map, and performing one round of position transformation operation corresponding to the currently traversed candidate solution on the data of laser points to obtain target points, wherein each time one target point is obtained, the quantity of target points is increased by one;
Step 2: controlling occupancy probability values corresponding to respective target points, which are obtained through performing one round of position transformation operation corresponding to the currently traversed candidate solution on the data of all laser points, to be sequentially summed; wherein, upon each summation, a current target point and its corresponding occupancy probability value are determined according to a summation sequence of the occupancy probability values corresponding to the respective target points, and a currently summed value is set as a real-time probability sum value of the current target point; determining, based on the real-time probability sum value of the current target point and the quantity of target points, whether the currently traversed candidate solution is a feasible solution or an infeasible solution, to determine, based on the currently calculated real-time probability sum value, whether the currently traversed candidate solution is a feasible solution or an infeasible solution, and setting the currently determined feasible solution as a current optimal solution after determining that the currently traversed candidate solution is the feasible solution;
Step 3: setting, based on the ratio of the resolution of the next layer of grid map to the resolution of the current layer of grid map, the determined feasible solution as at least one of candidate solutions of the next layer of grid map after the feasible solution is determined in the current layer of grid map by executing Step 2; after all candidate solutions in the current layer of grid map are traversed by executing Step 2, setting the next layer of grid map as the current layer of grid map as referred to in Step 1, and setting the last set candidate solutions of the next layer of grid map as the candidate solutions as referred to in Step 1; repeatedly executing Step 1, Step 2, and Step 3 until traversing to the last layer of grid map and a feasible solution is determined therefrom, or until the quantity of feasible solution determined in the current layer of grid map is zero; setting a last set current optimal solution in the same layer of grid map as the optimal feasible solution, and setting the optimal feasible solution as the re-localization result of the robot;
wherein the current layer of grid map is a layer of grid map currently obtained by the robot; the next layer of grid map is a layer of grid map to be obtained next by the robot; the quantity of candidate solutions in the next layer of grid map is less than the quantity of candidate solutions in the current layer of grid map; a resolution of the next layer of grid map is higher than a resolution of the current layer of grid map;
during each execution of Step 2 , the current target point refers to a target point corresponding to an occupancy probability value that is currently being summed; the occupancy probability value that is currently being summed refers to an occupancy probability value currently participating in the summation among occupancy probability values corresponding to all target points obtained through the same round of position transformation operation; a currently summed value refers to a sum value of occupancy probability values that are summed among the occupancy probability values corresponding to the respective target points obtained through the same round of position transformation operation.

6. The robot positioning method according to claim 5, wherein, in Step 3, setting, based on the ratio of the resolution of the next layer of grid map to the resolution of the current layer of grid map, the determined feasible solution as candidate solutions of the next layer of grid map comprises:
dividing, using the ratio of the resolution of the next layer of grid map to the resolution of the current layer of grid map, the feasible solution determined in the current layer of grid map into a plurality of candidate solutions in the next layer of grid map, wherein a ratio of a coordinate offset step size corresponding to the feasible solution in the current layer of grid map and a coordinate offset step size corresponding to any candidate solution divided in the next layer of grid map is equal to the ratio of the resolution of the next layer of grid map to the resolution of the current layer of grid map;
wherein the ratio of the resolution of the next layer of grid map to the resolution of the current layer of grid map is equal to a ratio of a coordinate offset step size for performing coordinate offset operation in the current layer of grid map to a coordinate offset step size for performing coordinate offset operation in the next layer of grid map;
wherein the position transformation operation performed on the data of laser points in each layer of grid map comprises the coordinate offset operation, and the coordinate offset operation is configured with the coordinate offset step size, where one candidate solution corresponds to one coordinate offset step size.

7. The robot positioning method according to claim 6, wherein Step 3 further comprises:
upon setting the determined feasible solution as at least one of candidate solutions of the next layer of grid map,
setting target points obtained through performing position transformation operation corresponding to the candidate solution of the next layer of grid map on the data of laser points as the target point obtained through performing one round of position transformation operation corresponding to the currently traversed candidate solution on the data of all laser points as referred to in Step 1;
setting an occupancy probability value corresponding to each target point obtained through performing position transformation operation corresponding to the candidate solution of the next layer of grid map on the data of laser points as the occupancy probability value corresponding to each target point obtained through performing one round of position transformation operation corresponding to the currently traversed candidate solution on the data of all laser points as referred to in Step 1; and
returning to Step 1.

8. The robot positioning method according to claim 7, wherein, when executing Step 2 in a first layer of grid map, the robot sets candidate solutions in the first layer of grid map as initial candidate solutions, and performs one round of position transformation operation corresponding to each initial candidate solution on the data of laser points, to obtain a corresponding target point and its coordinates; wherein a layer of grid map initially obtained by the robot refers to data of the first layer of grid map obtained from an internal memory, and the first layer of grid map is a layer of grid map with the lowest resolution among the multiple layers of grid map;
wherein, when executing Step 2 in an M-th layer of grid map, the robot selects each target point and its corresponding occupancy probability value obtained through performing one round of position transformation operation corresponding to the currently traversed candidate solution on the data of laser points; wherein the selected each target point and its corresponding occupancy probability value obtained through performing one round of position transformation operation corresponding to the currently traversed candidate solution on the data of laser points are obtained through executing Step 2 to Step 3 in an (M-1)-th layer of grid map; wherein M is an integer greater than or equal to 2, and M is less than or equal to the maximum number of layers allowed to be configured in the multiple layers of grid maps.

9. The robot positioning method according to claim 8, wherein,
when the feasible solution is determined in a layer of grid map with highest resolution through executing Step 3, the robot sets the feasible solution in the layer of grid map with highest resolution as the optimal feasible solution;
when a current position of the robot is set as a coordinate system origin in the layer of grid map with highest resolution, the robot sets all feasible solutions determined in Step 3 in the layer of grid map with highest resolution as a set of relative poses of the robot, forming a set of re-localization pose data of the robot;
wherein the layer of grid map with highest resolution is the last layer of grid map.

10. The robot positioning method according to claim 5, wherein determining whether the currently traversed candidate solution is a feasible solution or an infeasible solution based on the real-time probability sum value of the current target point and the quantity of target points in Step 2 comprises:
Step 21, determining, by the robot, that the quantity of laser points, the data of which the position transformation operation is performed on, in the current layer of grid map is N, and performing one round of position transformation operation on data of N laser points, to obtain N target points and their corresponding occupancy probability values;
Step 22: controlling the occupancy probability values corresponding to the N target points to be sequentially summed; and when summing up to an i-th target point, determining that a currently summed value is sum(i); wherein i is greater than or equal to a preset base number and less than or equal to N, and the preset base number is less than or equal to N; the i-th target point is the current target point;
Step 23: calculating a sum of sum(i) and (N-i)*max_prob, to obtain a predicted probability sum value; determining whether the predicted probability sum value is greater than or equal to a first preset screening threshold; proceeding to Step 24 in response to determining that the predicted probability sum value is greater than or equal to the first preset screening threshold; and determining that the candidate solution corresponding to the one round of position transformation operation performed in Step 21 is an infeasible solution in response to determining that the predicted probability sum value is not greater than or equal to the first preset screening threshold, stopping the calculation of sum(i), and setting a new round of position transformation operation as the one round of position transformation operation as referred to in Step 21;
Step 24: incrementing i by one, setting a result after the increment as i, repeatedly executing Step 22 until i is updated to be equal to N, and sum(N) is obtained;
Step 25: determining whether sum(N) is greater than or equal to a second preset screening threshold;
setting the candidate solution corresponding to the one round of position transformation operation performed in Step 21 as a feasible solution in the current layer of grid map in response to determining that sum(N) is greater than or equal to a second preset screening threshold; and determining the candidate solution corresponding to the one round of position transformation operation performed in Step 21 as an infeasible solution in response to determining that sum(N) is not greater than or equal to a second preset screening threshold;
wherein max_prob is a maximum single-point probability value; the single-point probability maximum value, a summation sequence, the quantity of summations, the first preset screening threshold, the second preset screening threshold, and the preset base number are all predefined;
wherein the first preset screening threshold is less than the second preset screening threshold.

11. The robot positioning method according to claim 10, wherein Step 2 further comprises:
after determining that the candidate solution corresponding to the one round of position transformation operation performed in Step 21 is an infeasible solution through executing Step 23,
setting a new round of position transformation operation as the one round of position transformation operation as referred to in Step 21;
repeatedly executing Step 21 to Step 25 to perform the new round of position transformation operation on the data of N laser points, until all candidate solutions in the current layer of grid map are traversed and position transformation operations corresponding to all candidate solutions in the current layer of grid map have been performed on the data of N laser points, and
beginning to traverse candidate solutions in the next layer of grid map.

12. The robot positioning method according to claim 11, wherein one target point and its corresponding occupancy probability value in one layer of grid map obtained through performing one round of position transformation operation corresponding to one candidate solution on data of each laser point;
wherein a matching relationship between the obtained one target point and its corresponding occupancy probability value is predefined;
wherein the occupancy probability value corresponding to one target point is used to indicate a probability that a position point to be repositioned falls into a grid corresponding to the target point in one layer of grid map;
wherein a sum of occupancy probability values corresponding to respective target points obtained through performing the same round of position transformation operation on the data of all laser points is sum(N), and is used to indicate a probability that a position point of the robot to be repositioned falls into a position drift range generated by performing one round of position transformation operation in one layer of grid map.

13. The robot positioning method according to claim 12, wherein new reference coordinates are obtained during each time of performing the angle deflection operation on data of the same one laser point, coordinate offset operation is performed on the new reference coordinates, and new target offset coordinates are obtained and the corresponding occupancy probability values are determined by indexing;
wherein one round of position transformation operation corresponding to one candidate solution comprises the angle deflection operation and the coordinate offset operation, wherein the coordinate offset operation comprises the abscissa offset operation and the ordinate offset operation; wherein the same round of position transformation operation refers to angle deflection operations of the same type and coordinate offset operations of the same type;
wherein, in the first layer of grid map, the quantity of times for performing the angle deflection operation on the data of the same one laser point is predefined, and the quantity of times for performing the coordinate offset operation on a same reference coordinate is predefined.

14. The robot positioning method according to claim 13, wherein the angle deflection operations of the same type have the same quantity of deflections, the coordinate offset operations of the same type comprise abscissa offset operations of the same type and ordinate offset operations of the same type, so that in the same layer of grid map, after performing the angle deflection operations of the same type and the coordinate offset operations of the same type, obtained target points have the same pose relationship relative to the data of the same one laser point before performing the current round of position transformation operation; wherein angle deflection amount in the angle deflection operations of the same type and coordinate offset amount in the coordinate offset operations of the same type form the candidate solution;
wherein the abscissa offset operation comprises performing one abscissa offset in the abscissa axis direction, and the ordinate offset operation comprises performing one ordinate offset in the ordinate axis direction.

15. The robot positioning method according to claim 14, wherein the quantity of abscissa offset occurrences of the abscissa offset operations of the same type in one layer of grid map with a relatively high resolution is greater than the quantity of abscissa offset occurrences of the abscissa offset operations of the same type in one layer of grid map with a relatively low resolution;
wherein a coordinate offset step size for performing the abscissa offset operations of the same type on the data of laser points in one layer of grid map with relatively low resolution is greater than a coordinate offset step size for performing the abscissa offset operations of the same type on the data of laser points in one layer of grid map with relatively high resolution;
wherein an offset amount of the abscissa offset operations of the same type along the abscissa axis direction in one layer of grid map with relatively high resolution is equal to an offset amount of the abscissa offset operations of the same type along the abscissa axis direction in one layer of grid map with relatively low resolution;
wherein the quantity of ordinate offset occurrences of the ordinate offset operations of the same type in one layer of grid map with a relatively high resolution is greater than the quantity of ordinate offset occurrences of the ordinate offset operations of the same type in one layer of grid map with a relatively low resolution;
wherein a coordinate offset step size for performing the ordinate offset operations of the same type on the data of laser points in one layer of grid map with relatively low resolution is greater than a coordinate offset step size for performing the ordinate offset operations of the same type on the data of laser points in one layer of grid map with relatively high resolution;
wherein an offset amount of the ordinate offset operations of the same type along the ordinate axis direction in one layer of grid map with relatively high resolution is equal to an offset amount of the ordinate offset operations of the same type along the ordinate axis direction in one layer of grid map with relatively low resolution.

16. The robot positioning method according to claim 15, wherein the coordinate offset step size for performing the abscissa offset operations of the same type on the data of laser points in one layer of grid map with relatively low resolution is a first lateral step size; the coordinate offset step size for performing the abscissa offset operations of the same type on the data of laser points in one layer of grid map with relatively high resolution is a second lateral step size;
wherein the coordinate offset step size for performing the ordinate offset operations of the same type on the data of laser points in one layer of grid map with relatively low resolution is a first longitudinal step size; the coordinate offset step size for performing the ordinate offset operations of the same type on the data of laser points in one layer of grid map with relatively high resolution is a second longitudinal step size;
after performing the abscissa offset operations of the same type and the ordinate offset operations of the same type on the data of laser points, and a feasible solution in one layer of grid map with relatively low resolution is configured to one layer of grid map with relatively high resolution, the quantity of candidate solutions divided in one layer of grid map with relatively high resolution is equal to a product between a ratio of the first lateral step size to the second lateral step size and a ratio of the first longitudinal step size to the second longitudinal step size, so as to set one feasible solution in the current layer of grid map as multiple candidate solutions in the next layer of grid map in Step 3, wherein a ratio of the quantity of set candidate solutions to the quantity of feasible solutions is equal to the ratio of a resolution of the next layer of grid map to the resolution of the current layer of grid map.

17. The robot positioning method according to claim 16, wherein one round of position transformation operation comprises: when performing the angle deflection operation each time, a position transformation processing module performs one coordinate offset operation on the corresponding reference coordinate in one coordinate axis direction, and performs one coordinate offset operation on the corresponding reference coordinate in the other coordinate axis direction;
wherein one coordinate axis direction is the abscissa axis direction, and the other coordinate axis direction is the ordinate axis direction; or, one coordinate axis direction is the ordinate axis direction, the other coordinate axis direction is the abscissa axis direction.

18. A chip, configured to perform the robot positioning method based on the multi-layer grid map according to claim 1, to enable the chip to recursively determine whether each of candidate solutions of multiple layers of grid map in order from low resolution to high resolution is a feasible solution, until an optimal feasible solution is determined, and set the optimal feasible solution as the re-localization result.

19. A laser robot, wherein the laser robot is a robot equipped with the laser sensor, and the chip according to claim 18 is disposed inside the laser robot, wherein the chip is electrically connected to the laser sensor;
wherein the laser sensor of the laser robot collects the data of laser points within a current detection region, the robot stores grid maps of the current detection region at multiple resolution levels, and configures the grid maps at multiple resolutions as multiple layers of grid map arranged in the order from low resolution to high resolution.
